# EUROPÄISCHE PATENTSCHRIFT

(11) **EP 3 152 515 B1**
(45) Veröffentlichungstag und Bekanntmachung des Hinweises auf die Patenterteilung: **08.05.2019**
(21) Anmeldenummer: 15726959.8
(22) Anmeldetag: 03.06.2015
(51) Int. Cl.: G01B 5/10

(54) **SYSTEM UND VERFAHREN ZUR MESSUNG EINER ABMESSUNG EINES WERKSTÜCKS**
SYSTEM AND METHOD FOR MEASURING A DIMENSION OF A WORKPIECE
SYSTÈME ET PROCÉDÉ DE MESURE D'UNE DIMENSION D'UNE PIÈCE

(30) Priorität: 03.06.2014 DE 102014107784
(43) Veröffentlichungstag der Anmeldung: 12.04.2017
(73) Patentinhaber: MARPOSS GMBH, 71384 Weinstadt (DE)
(72) Erfinder: DRECHSEL-GRAU, Erich, 71737 Kirchberg (DE)
(74) Vertreter: Hoeger, Stellrecht & Partner Patentanwälte mbB
(86) Internationale Anmeldenummer: PCT/EP2015/062365
(87) Internationale Veröffentlichungsnummer: WO 2015/185615

(56) Entgegenhaltungen:
- WO-A1-2013/095892
- DE-A1- 3 521 710
- JP-A- 2011 002 317
- US-A- 3 427 723
- US-A- 3 648 377
- US-A- 4 597 184
- US-A- 5 088 207
- US-A- 5 230 157
- US-A- 5 643 049
- US-A- 6 088 924
- US-A1- 2002 095 808

## Beschreibung

Die vorliegende Erfindung betrifft ein System zur Messung einer Abmessung eines längs einer geradlinigen Bewegungsbahn bewegten Werkstücks, umfassend eine Vorrichtung zur Messung der Abmessung des Werkstücks, wobei die Vorrichtung ein Zentrierelement und zwei diesem zugeordnete Tastglieder umfasst, dass das Zentrierelement derart angeordnet und ausgebildet ist, dass es eine parallel oder im Wesentlichen parallel zur Bewegungsbahn verlaufende Längsrichtung definiert, dass die Längsrichtung quer, insbesondere senkrecht, zur Schwerkraftrichtung verläuft, wobei die zwei Tastglieder beweglich gelagert und infolge eines Kontakts mit dem Werkstück voneinander weg bewegbar sind dass das Zentrierelement in einer Richtung parallel oder im Wesentlichen parallel zur Schwerkraftrichtung beweglich gelagert und infolge eines Kontakts mit dem Werkstück entgegen der Schwerkraftrichtung bewegbar ist, wobei das Zentrierelement in einer Richtung parallel oder im Wesentlichen parallel zur Schwerkraftrichtung beweglich gelagert und infolge eines Kontakts mit dem Werkstück entgegen der Schwerkraftrichtung bewegbar ist, wobei das Zentrierelement eine Zentrierausnehmung aufweist, welche einen Einlaufbereich und einen Messbereich definiert, wobei das Zentrierelement einen Auslaufbereich aufweist und wobei der Messbereich zwischen dem Einlaufbereich und dem Auslaufbereich angeordnet oder ausgebildet ist, wobei die Zentrierausnehmung längs des Messbereichs einen konstanten Querschnitt aufweist.

Ferner betrifft die vorliegende Erfindung ein Verfahren zur Messung einer Abmessung eines längs einer geradlinigen Bewegungsbahn bewegten Werkstücks, wobei das Verfahren umfasst:
- Bereitstellen einer Messeinrichtung, welche zwei Tastglieder umfasst, die relativ zueinander beweglich gelagert sind,
- Bereitstellen eines Zentrierelements, welches eine Längsrichtung definiert, der Messeinrichtung zugeordnet und in einer Richtung parallel oder im Wesentlichen parallel zur Schwerkraftrichtung zusammen mit der Messeinrichtung beweglich gelagert ist,

- Bewegen des Zentrierelements infolge eines Kontakts mit dem zu vermessenden Werkstück entgegen der Schwerkraftrichtung aus einer Grundstellung in eine Messstellung,
- Messen des Abstands zwischen den zwei Tastgliedern, die insbesondere infolge eines Kontakts mit dem Werkstück voneinander weg bewegbar sind, und
- Berechnen der zu messenden Abmessung des Werkstücks aus einem Abstandsverlauf des gemessenen Abstands zwischen den zwei Tastgliedern in der Messstellung,
wobei das Zentrierelement infolge eines Kontakts mit dem zu vermessenden Werkstück entgegen der Schwerkraftrichtung aus einer Grundstellung in eine Messstellung bewegt wird, wobei ein Zentrierelement bereitgestellt wird, welches eine Zentrierausnehmung aufweist, welche einen Einlaufbereich und einen Messbereich definiert und einen Auslaufbereich aufweist, wobei das Werkstück während seiner Bewegung die Zentrierausnehmung zuerst im Einlaufbereich kontaktiert und das Zentrierelement dabei von der Grundstellung in die Messstellung überführt und dann im Messbereich in der Messstellung kontaktiert und wobei durch Messen des Abstands zwischen den Tastgliedern beim Durchlaufen des Messbereichs in der Messstellung die zu messende Abmessung des Werkstücks bestimmt wird, wobei der Messbereich zwischen dem Einlaufbereich und dem Auslaufbereich angeordnet oder ausgebildet ist und wobei das Werkstück während seiner Bewegung die Zentrierausnehmung nach dem Messbereich im Auslaufbereich kontaktiert und dabei das Zentrierelement wieder aus der Messstellung in die Grundstellung zurückführt, wobei ein Zentrierelement bereitgestellt wird, dessen Zentrierausnehmung längs des Messbereichs einen konstanten Querschnitt aufweist.

Systeme und Verfahren der eingangs beschriebenen Art werden insbesondere in der industriellen Fertigung von Werkstücken eingesetzt. Bei diesen kann es sich beispielsweise um rotationssymmetrische oder im Wesentlichen rotationssymmetrische Werkstücke handeln. Insbesondere wird nach der Fertigung deren Durchmesser bestimmt, um zu prüfen, ob sich dieser im Rahmen der vorgegebenen Fertigungstoleranz bewegt. Bei im Querschnitt elliptischen Werkstücken können beispielsweise auch Halbachsen des Querschnitts des Werkstücks zur Prüfung der Fertigungsqualität bestimmt werden.

Werden zum Messen der Abmessung des Werkstücks mechanische Tastglieder verwendet, die das Werkstück berühren, dann ist eine Messung der Abmessung des Werkstücks während einer Bewegung desselben nur sehr schwer möglich. Es ist daher bekannt, die Bewegung des Werkstücks zu stoppen, die zu prüfende Abmessung zu messen und dann das Werkstück weiter zu transportieren. Dies hat jedoch den Nachteil, dass ein kontinuierlicher Transport des Werkstücks nicht möglich ist.

Ferner ist ein Problem bei einer kontinuierlichen Messung, dass aufgrund von Fertigungstoleranzen sowie einer nicht definierten Anordnung des Werkstücks auf einer Transporteinrichtung, beispielsweise einem Transportband, eine sinnvolle, allen möglichen Ausrichtungen der Werkstücke gerecht werdende Anordnung der zwei Tastglieder praktisch nicht möglich ist.

Aus der US 2002/0095808 A1 ist eine Vorrichtung zum Messen einer Umfangsform eines rollenförmigen Gegenstands bekannt. In der US 5,230,157 ist ein Verschlussmechanismus für Berührungshebel beschrieben. Eine Profilbestimmungsvorrichtung für Rollen ist in der US 3,427,723 offenbart. Aus der US 5,088,207 ist eine Bügelmessschraube bekannt. Die US 3,648,377 betrifft ein Rundheitsmessinstrument mit Schlinge. In der DE 35 21 710 A1 ist eine Vorrichtung an einer Werkzeugmaschine zum Messen des Durchmessers exzentrisch umlaufender Werkstücke offenbart. Aus der JP 2011 002317 A ist eine Formmessmaschine bekannt. In der US 5,643,049 ist eine Messvorrichtung mit beweglichem Kontakt zum Messen zylindrischer Werkstücke beim Verlassen einer Schleifmaschine beschrieben. Ein System und Verfahren zum vermessen von Röhren ist aus der WO 2013/095892 A1 bekannt. Eine Messlehre zum Überprüfen von Abmessungen von Werkstücken ist in der US 4,597,184 offenbart. De US 6,088,924 betrifft Maschinen zum Schleifen eines zylindrischen Werkstücks in einer Orbitalbewegung.

Es ist daher eine Aufgabe der vorliegenden Erfindung, ein System und ein Verfahren der eingangs beschriebenen Art so zu verbessern, dass eine zuverlässige Messung einer Abmessung eines kontinuierlich bewegten Werkstücks möglich ist.

Diese Aufgabe wird bei einem System der eingangs beschriebenen Art erfindungsgemäß dadurch gelöst, dass das Zentrierelement in einer Richtung parallel oder im Wesentlichen parallel zur Schwerkraftrichtung beweglich gelagert und infolge eines Kontakts mit dem Werkstück entgegen der Schwerkraftrichtung bewegbar ist, das Zentrierelement eine Zentrierausnehmung aufweist, welche einen Einlaufbereich und einen Messbereich definiert, dass das Zentrierelement einen Auslaufbereich aufweist und dass der Messbereich zwischen dem Einlaufbereich und dem Auslaufbereich angeordnet oder ausgebildet ist.

Mit einem solchen System ist es insbesondere möglich, eine Abmessung, beispielsweise einen Durchmesser, eines kontinuierlich bewegten Werkstücks zuverlässig und sicher zu messen. Insbesondere ermöglicht es das Zentrierelement, die beiden Tastglieder, welche insbesondere einen Teil einer Messeinrichtung bilden können, in Abhängigkeit von einer Position des bewegten Werkstücks so zu positionieren, dass diese beim Vorbeibewegen des Werkstücks die zu messende Abmessung definieren können, und zwar durch den Abstand zwischen sich, wenn sie gleichzeitig am Werkstück anliegen. Tritt das Werkstück mit dem Zentrierelement in Kontakt, kann es insbesondere entgegen der Schwerkraftrichtung angehoben werden. Sind die zwei Tastglieder dem Zentrierelement in eindeutiger Weise zugeordnet, dann ermöglicht es das System die Tastglieder mit Hilfe des Zentrierelements in die zur Messung des Werkstücks erforderliche Position zu bewegen. So kann mit dem System, unabhängig davon, wie das Werkstück bewegt wird und wie es beispielsweise auf einer Transportvorrichtung positioniert ist, das Werkstück sicher vermessen werden. Mit dem vorgeschlagenen System wird also nicht das Werkstück in eine definierte Position bewegt, sondern die Vorrichtung beziehungsweise ein Teil derselben, nämlich insbesondere die beiden Tastglieder durch Positionieren des Zentrierelements, relativ zum Werkstück. Dies gestattet es, die Vorrichtung zur Messung der Abmessung des Werkstücks mit einer praktisch beliebig ausgestalteten Transportvorrichtung zu kombinieren. Es ist nicht erforderlich, an der Transportvorrichtung selbst irgendwelche Vorkehrungen zu treffen oder Änderungen an dieser vorzunehmen, um das Werkstück zu vermessen. Insbesondere ist es vorteilhaft, wenn die Längsrichtung senkrecht zur Schwerkraftrichtung verläuft und wenn die Tastgliederlängsachse senkrecht zur Schwerkraftrichtung verläuft. Insbesondere können die zwei Tastglieder eine gemeinsame Tastgliederlängsachse definieren und relativ zueinander parallel zur Tastgliederlängsachse beweglich gelagert und infolge eines Kontakts mit dem Werkstück voneinander weg bewegbar sein. Die Tastgliederlängsachse kann vorzugsweise quer, insbesondere senkrecht, zur Schwerkraftrichtung verlaufen. Alternativ oder optional können die Tastglieder auch verschwenkbar oder rotierbar gelagert sein, beispielsweise um eine parallel zur Schwerkraftrichtung verlaufende Dreh- oder Schwenkachse. Spitzen der Tastglieder, die mit dem Werkstück in Kontakt treten können, können sich dann ebenso voneinander weg bewegen wie linear bewegbar gelagerte Tastglieder. Die Tastglieder können insbesondere auch in Form von Druckluftdüsen ausgebildet sein, mit denen eine dynamische Strömungsmessung zur Bestimmung der Werkstückabmessungen durchführbar ist. Insbesondere kann das Werkstück so berührungslos mit den Tastgliedern vermessen werden. Ferner können die Tastglieder auch in Form von Näherungssensoren ausgebildet sein. Auf einfache Weise lässt sich das Zentrierelement durch das Werkstück zentrieren, da das Zentrierelement eine Zentrierausnehmung aufweist, welche einen Einlaufbereich und einen Messbereich definiert. Beispielsweise kann der Einlaufbereich relativ zu Seitenflächen des Messbereichs abgeschrägte, Aufgleitflächen definierende Seitenflächen aufweisen, so dass das Zentrierelement im Einlaufbereich am Werkstück aufgleiten und in eine Messposition bewegt werden kann, die durch den Messbereich definiert wird. Der Einlaufbereich dient also insbesondere dem Zweck, das Zentrierelement durch das Werkstück so zu bewegen, dass die Tastglieder, wenn sich das Werkstück längs des Messbereichs bewegt, die gewünschte Relativposition zum Werkstück einnehmen, um durch dieses entsprechend ausgelenkt zu werden. Die Tastglieder können insbesondere abgeschrägte Endflächen mit einer Spitze aufweisen, so dass die Tastglieder beim in Kontakt treten mit dem Werkstück ebenfalls an diesem aufgleiten können. Vorteilhaft ist es, dass das Zentrierelement einen Auslaufbereich aufweist und wenn der Messbereich zwischen dem Einlaufbereich und dem Auslaufbereich angeordnet oder ausgebildet ist. Der Auslaufbereich dient insbesondere dazu, das Zentrierelement wieder in seine Ausgangsposition zu überführen, indem es am Werkstück im Auslaufbereich entlang gleiten kann. Auch der Auslaufbereich kann insbesondere abgeschrägte, Aufgleitflächen definierende Seitenflächen aufweisen, die im relativ zu Seitenflächen des Messbereichs etwas geneigt sind. Die Zentrierausnehmung weist längs des Messbereichs einen konstanten Querschnitt auf. So ist es möglich, auf einer definierten Strecke für eine Messzeit, die von der Bewegungsgeschwindigkeit des Werkstücks abhängt, die zu messende Abmessung des Werkstücks zu messen. Der konstante Querschnitt der Zentrierausnehmung längs des Messbereichs ermöglicht es insbesondere, eine definierte Relativposition des Zentrierelements und des Werkstücks so lange beizubehalten, wie das Werkstück mit dem Messbereich in Kontakt steht. Vorteilhaft ist es, dass das Zentrierelement ein Einlaufende und ein Auslaufende aufweist und dass die Zentrierausnehmung längs des Einlaufbereichs einen sich ausgehend vom Einlaufende zum Messbereich hin verjüngenden Querschnitt aufweist. Das Zentrierelement weist so insbesondere teilweise die Form einer Art Trichter auf, welcher durch das Werkstück zentriert wird, um das Zentrierelement insgesamt relativ zum Werkstück in eine definierte Position zu bringen, wenn das Werkstück den Messbereich berührt. Ferner ist es günstig, dass die Zentrierausnehmung längs des Auslaufbereichs einen sich ausgehend vom Auslaufende zum Messbereich hin verjüngenden Querschnitt aufweist. So kann das Zentrierelement wieder kontinuierlich aus der Messstellung oder Messposition in die Grundstellung zurück bewegt werden. Ein schlagartiges Absenken des Zentrierelements kann so vermieden werden. Gemäß der Erfindung ist vorgesehen, dass Messbereichnutseitenflächen der Zentrierausnehmung im Messbereich Messbereichnutseitenflächenebenen definieren, die sich längs einer Schnittgeraden schneiden, welche parallel oder im Wesentlichen parallel zur Längsrichtung verläuft. So kann insbesondere eine definierte Messposition durch die Zentrierausnehmung vorgegeben werden. Das Werkstück kann in der Messposition am Messbereich der Zentrierausnehmung entlang gleiten und so eine konstante Relativposition relativ zum Zentrierelement in einer Richtung quer zur Längsrichtung einnehmen. Ferner ist es günstig, dass Einlaufbereichnutseitenflächen der Zentrierausnehmung im Einlaufbereich Einlaufbereichnutseitenflächenebenen definieren, die sich längs einer Einlaufschnittgeraden schneiden, welche Einlaufschnittgerade mit der Längsrichtung einen Einlaufwinkel einschließt. Auf diese Weise lässt sich eine Neigung der Einlaufbereichnutseitenflächen relativ zu den Messbereichnutseitenflächen in gewünschter Weise vorgeben und somit ein Aufgleiten des Zentrierelements am Werkstück in gewünschter Weise vorgeben. Ferner ist es günstig, dass Auslaufbereichnutseitenflächen der Zentrierausnehmung im Auslaufbereich Auslaufbereichnutseitenflächenebenen definieren, die sich längs einer Auslaufschnittgeraden schneiden, welche Auslaufschnittgerade mit der Längsrichtung einen Auslaufwinkel einschließt. Die Zentrierausnehmung in dieser Weise auszubilden ermöglicht es insbesondere, das Zentrierelement wieder kontinuierlich von der Messposition oder Messstellung zurück in seine Grundstellung abzusenken.

Günstig ist es, wenn die Tastgliederlängsachse quer zur Längsrichtung verläuft. Insbesondere ist es günstig, wenn sie senkrecht zur Längsrichtung verläuft. Wird beispielsweise ein rotationssymmetrisches oder im Wesentlichen rotationssymmetrisches Werkstück parallel zu seiner Längsachse bewegt, dann können die Tastglieder längs ihrer Tastgliederlängsachse so quer zur Längsrichtung und damit quer zur Bewegungsrichtung des Werkstücks ausgelenkt werden, um so einen Abstand zwischen ihnen und damit eine Abmessung des Werkstücks zu messen.

Besonders einfach ausbilden lässt sich das System, wenn die Zentrierausnehmung in Form einer Nut ausgebildet ist, welche nach unten weisend geöffnet ist. Dies gestattet es, das Zentrierelement über dem Werkstück anzuordnen, so dass das Zentrierelement durch das Werkstück insbesondere entgegen der Schwerkraftrichtung aus einer Grundstellung in eine Messstellung ausgelenkt werden kann.

Günstig ist es, wenn die Nut in Form einer Keilnut ausgebildet ist und zwei relativ zueinander um einen Keilwinkel geneigte Seitenflächen aufweist. Eine Keilnut hat insbesondere den Vorteil, dass rotationssymmetrische oder im Wesentlichen rotationssymmetrische Werkstücke sicher durch ein solches Zentrierelement zentriert werden können, wobei das Werkstück die Zentrierausnehmung lediglich im Bereich der zueinander geneigten Nutseitenflächen berührt.

Vorteilhaft ist es, wenn der Keilwinkel einen Wert in einem Bereich von etwa 70° bis etwa 110° aufweist. Insbesondere ist es günstig, wenn der Keilwinkel einen Wert von etwa 90° aufweist. So kann auf einfache Weise eine Zentrierung erfolgen, insbesondere auch parallel zur Längsrichtung des Zentrierelements.

Vorzugsweise weisen der Einlaufwinkel und/oder der Auslaufwinkel einen Wert in einem Bereich von etwa 1° bis etwa 5° auf. Insbesondere ist es günstig, wenn sie einen Wert von etwa 3° aufweisen. Einlaufwinkel und Auslaufwinkel im angegebenen Bereich ermöglichen auf einfache Weise ein Anheben und Absenken des Zentrierelements durch das Werkstück.

Gemäß einer weiteren bevorzugten Ausführungsform der Erfindung kann vorgesehen sein, dass das Zentrierelement quer oder im Wesentlichen quer zur Schwerkraftrichtung und quer oder im Wesentlichen quer zur Längsrichtung beweglich gelagert ist. Insbesondere kann es senkrecht zur Schwerkraftrichtung und insbesondere auch senkrecht zur Längsrichtung beweglich gelagert sein. Sind die Werkstücke quer zur Bewegungsrichtung nicht in definierter Weise beispielsweise auf einer Transportvorrichtung angeordnet, ermöglicht es die beschriebene Lagerung des Zentrierelements ferner auch, das Zentrierelement nicht nur entgegen der Schwerkraftrichtung, sondern auch quer zu dieser und zur Längsrichtung durch das Werkstück zu positionieren. Damit ist es mit der Vorrichtung praktisch möglich, das Zentrierelement in einer Ebene senkrecht zur Längsrichtung beziehungsweise Bewegungsrichtung des Werkstücks durch dieses zu positionieren. Optional kann das Zentrierelement auch nur quer oder im Wesentlichen quer zur Schwerkraftrichtung und quer oder im Wesentlichen quer zur Längsrichtung beweglich gelagert sein und muss nicht zwingend parallel zur Schwerkraftrichtung beweglich gelagert sein. So kann insbesondere eine ausschließlich horizontale Zentrierung des Zentrierelements erfolgen, wenn beispielsweise keine vertikale Ausrichtung des Zentrierelements erforderlich ist. Eine horizontale Auslenkung kann insbesondere entgegen der Wirkung von mindestens einem vorspannenden Element erfolgen, welches das Zentrierelement wieder in eine Ausgangs- oder Grundstellung zurückbewegt, wenn das Werkstück nicht mehr mit dem Zentrierelement in Kontakt steht.

Vorzugsweise ist den beiden Tastgliedern mindestens ein Messkopf zugeordnet zum Messen einer Bewegung und/oder Auslenkung der beiden Tastglieder infolge eines Kontakts mit dem Werkstück. Unter einem Messkopf im Sinne dieser Patentanmeldung ist insbesondere ein Wegaufnehmer zu verstehen, mit dem eine Bewegung und/Auslenkung der beiden Tastglieder gemessen werden kann. Vorzugsweise ist ein Abstand zwischen den beiden Tastgliedern in einer unausgelenkten Grundstellung vorgegeben. Ein Kontakt in diesem Sinne kann insbesondere auch berührungslos erfolgen beim Einsatz von Tastgliedern in Form von Druckluftdüsen oder Näherungssensoren.

Günstig ist es, wenn jedem der beiden Tastglieder ein eigener Messkopf zugeordnet ist. So können die beiden Tastglieder unabhängig voneinander bewegt und auch ihre Bewegung beziehungsweise Auslenkung unabhängig voneinander gemessen werden.

Günstig ist es, wenn der mindestens eine Messkopf und das Zentrierelement in einer Messstellung miteinander unbeweglich gekoppelt sind. So ist es insbesondere möglich, die beiden Tastglieder relativ zum Zentrierelement in gewünschter Weise zu positionieren. Beim Vorbeigleiten eines Werkstücks am Zentrierelement können dann die Tastglieder relativ zum mindestens einen Messkopf und zum Zentrierelement ausgelenkt werden.

Vorzugsweise sind der mindestens eine Messkopf und das Zentrierelement relativ zueinander justierbar angeordnet. In Abhängigkeit von einer vorgegebenen Soll-Abmessung des Werkstücks, beispielsweise einem Soll-Durchmesser, kann so der mindestens eine Messkopf relativ zum Zentrierelement in die erforderliche Höhe zur Durchführung der Messung gebracht werden.

Vorteilhaft ist es, wenn freie, aufeinander zu weisende Enden der beiden Tastglieder in einer Ebene quer zur Längsrichtung relativ zum Zentrierelement und/oder zum mindestens einen Messkopf justierbar sind. Insbesondere ist es vorteilhaft, wenn die freien Enden der Tastglieder senkrecht zur Längsrichtung justierbar sind. Damit ist es insbesondere möglich, die Tastglieder in Abhängigkeit von der Größe des Werkstücks zu positionieren, so dass insbesondere ein maximaler Durchmesser desselben zuverlässig bestimmbar ist.

Die Handhabung des Systems kann insbesondere dadurch verbessert werden, dass die Vorrichtung einen Rahmen umfasst, dass am Rahmen ein Horizontalschlitten quer zur Schwerkraftrichtung und quer zur Längsrichtung beweglich gelagert ist und dass der Horizontalschlitten das Zentrierelement trägt. Mit dem Rahmen lässt sich die Vorrichtung beispielsweise beliebig an eine Transportvorrichtung, die das Werkstücktransportiert beziehungsweise bewegt, anordnen. Die Ausbildung des Horizontalschlittens ermöglicht eine Positionierung des Zentrierelements quer zur Längsrichtung und quer zur Schwerkraftrichtung.

Günstig ist es, wenn der Horizontalschlitten den mindestens einen Messkopf trägt. Auf diese Weise wird mit einer Bewegung des Horizontalschlittens und damit auch des Zentrierelements der mindestens eine Messkopf mitbewegt.

Vorteilhaft ist es, wenn am Rahmen ein Vertikalschlitten parallel zur Schwerkraftrichtung beweglich gelagert ist und wenn der Vertikalschlitten das Zentrierelement und/oder den mindestens einen Messkopf und/oder den Horizontalschlitten trägt. Der Vertikalschlitten ermöglicht es insbesondere, das Zentrierelement und beispielsweise den mindestens einen, dem Zentrierelement zugeordneten Messkopf in definierter Weise parallel zur Schwerkraftrichtung beweglich zu lagern. Trägt der Vertikalschlitten auch den Horizontalschlitten oder der Horizontalschlitten den Vertikalschlitten, so kann das Zentrierelement in Folge eines Kontakt mit dem Werkstück nahezu beliebig in einer Ebene quer zur Längsrichtung durch das Werkstück positioniert werden.

Vorteilhaft ist es, wenn der Vertikalschlitten mit einem mit einem Ausgleichsgewicht gekoppelt ist. Auf diese Weise kann eine zum Auslenken des Zentrierelements entgegen der Schwerkraftrichtung erforderliche Auslenkkraft minimiert werden. Alternativ oder optional ist es auch denkbar, das Zentrierelement mit einem vorspannenden Element, beispielsweise einer Druckfeder in Form einer Schrauben oder Blattfeder, parallel zur Schwerkraftrichtung nach unten auf das Werkstück hin vorzuspannen, um eine definierte Anlage des Zentrierelements am vorbeibewegten Werkstück sicherzustellen.

Günstigerweise ist eine Masse des Ausgleichsgewichts kleiner als eine Masse des Vertikalschlittens und der von diesem getragenen Teile und Elemente. Dies ermöglicht es insbesondere, dass das Zentrierelement beispielsweise allein durch die auf es wirkende Schwerkraft in Richtung auf das Werkstück hin mit einer Andruckkraft beaufschlagt werden kann. Die Größe der Andruckkraft kann durch entsprechende Wahl des Ausgleichsgewichts vorgegeben werden.

Gemäß einer weiteren bevorzugten Ausführungsform der Erfindung kann das System eine Transportvorrichtung zum Bewegen des Werkstücks längs einer geradlinigen Bahn umfassen. Die Transportvorrichtung dient also insbesondere dazu, das Werkstück zu bewegen. Optional kann die Transportvorrichtung auch ausgebildet sein, um das Werkstück längs einer gekrümmten Bahn zu bewegen.

Vorteilhaft ist es, wenn die Transportvorrichtung einen geradlinigen Transportvorrichtungsabschnitt umfasst und wenn die Vorrichtung zur Messung der Abmessung des Werkstücks im Bereich des geradlinigen Transportvorrichtungsabschnitts angeordnet ist. So kann sichergestellt werden, dass das Werkstück bei der Messung in einer Transportrichtung an den Tastgliedern vorbeibewegt werden kann, die insbesondere parallel zur Längsrichtung verläuft.

Günstig ist es, wenn die Transportvorrichtung mindestens ein Transportelement umfasst, welches das Werkstück trägt und in einer Transportrichtung bewegt. Insbesondere kann die Transportvorrichtung ausgebildet sein, um das Werkstück mit dem mindestens einen Transportelement kontinuierlich zu bewegen.

Vorzugsweise ist das mindestens eine Transportelement in Form eines Transportbandes oder einer Transportkette oder eines oben offenen Transportbehälters ausgebildet. Denkbar sind auch beliebige andere Transportelemente, die das Transportieren des Werkstücks in einer Transportrichtung ermöglichen und einen Zugriff der Tastglieder auf das Werkstück gestatten. Transportbehälter können insbesondere an eine Kontur des Werkstücks angepasst sein, um dieses formschlüssig oder im Wesentlichen formschlüssig aufnehmen zu können.

Für eine kontinuierliche Förderung von Werkstücken ist es günstig, wenn das mindestens eine Transportelement in Form eines umlaufenden Transportelements ausgebildet ist. Denkbar sind insbesondere umlaufende Transportbänder oder umlaufende Transportketten oder eine Mehrzahl miteinander gekoppelter, offener Transportbehälter.

Vorteilhaft ist es, wenn die Vorrichtung zur Messung der Abmessung des Werkstücks im Bereich des geradlinigen Transporteinrichtungsabschnitts oberhalb des mindestens einen Transportelements angeordnet ist. So kann das zu vermessende Werkstück unter dem Zentrierelement der Vorrichtung hindurch bewegt werden und dabei das Zentrierelement mit den Tastgliedern in gewünschter Weise positionieren, um die zu bestimmende Abmessung des Werkstücks zu messen.

Die eingangs gestellte Aufgabe wird ferner bei einem Verfahren der eingangs beschriebenen Art erfindungsgemäß dadurch gelöst, dass ein Zentrierelement mit einem Einlaufende und einem Auslaufende bereitgestellt wird und die Zentrierausnehmung längs des Einlaufbereichs einen sich ausgehend vom Einlaufende zum Messbereich hin verjüngenden Querschnitt aufweist, so dass das Zentrierelement ausgehend vom Einlaufende auf dem Werkstück aufgleitet und von der Grundstellung in die Messstellung überführt wird, dass ein Zentrierelement bereitgestellt wird, dessen Zentrierausnehmung längs des Auslaufbereichs einen sich ausgehend vom Auslaufende zum Messbereich hin verjüngenden Querschnitt aufweist, und das Zentrierelement ausgehend vom Messbereich bis zum Auslaufende auf dem Werkstück aufliegt und auf diesem gleitet und dabei von der Messstellung in die Grundstellung zurückgeführt wird, dass ein Zentrierelement bereitgestellt wird, bei welchem Messbereichnutseitenflächen der Zentrierausnehmung im Messbereich Messbereichnutseitenflächenebenen definieren, die sich längs einer Schnittgeraden schneiden, welche parallel oder im Wesentlichen parallel zur Längsrichtung verläuft, dass ein Zentrierelement bereitgestellt wird, bei welchem Einlaufbereichnutseitenflächen der Zentrierausnehmung im Einlaufbereich Einlaufbereichnutseitenflächenebenen definieren, die sich längs einer Einlaufschnittgeraden schneiden, welche Einlaufschnittgerade mit der Längsrichtung einen Einlaufwinkel einschließt und ein Zentrierelement bereitgestellt wird, bei welchem Auslaufbereichnutseitenflächen der Zentrierausnehmung im Auslaufbereich Auslaufbereichnutseitenflächenebenen definieren, die sich längs einer Auslaufschnittgeraden schneiden, welche Auslaufschnittgerade mit der Längsrichtung einen Auslaufwinkel einschließt.

Das erfindungsgemäß vorgeschlagene Verfahren ermöglicht insbesondere eine Messung einer Abmessung des Werkstücks, während dieses kontinuierlich bewegt wird. Dabei muss nicht die Position des Werkstücks relativ zur Messeinrichtung verändert werden, sondern die Messeinrichtung wird durch das Werkstück in definierter Weise positioniert. Hierzu dient das entsprechend ausgebildete und angeordnete Zentrierelement, welches mechanisch mit dem Werkstück in Kontakt tritt und von diesem entgegen der Schwerkraftrichtung aus einer Grundstellung in eine Messstellung oder Messposition ausgelenkt wird. Die beiden Tastglieder können am Werkstück aufgleiten und ein Abstand derselben in der Messstellung oder Messposition gemessen und so die zu messende Abmessung des Werkstücks bestimmt werden. Beispielsweise kann dies dadurch erfolgen, dass ein Abstand zwischen den Tastgliedern in der Grundstellung gemessen und die Abmessung des Werkstücks berechnet wird durch Addition der Auslenkung der zwei Tastglieder relativ zueinander in der Messstellung im Vergleich zur Grundstellung. Das beschriebene Verfahren lässt sich insbesondere auf einfache Weise durchführen in Verbindung mit einer beliebigen Transporteinrichtung, mit welcher das Werkstück bewegt wird. Insbesondere können die zwei Tastglieder eine gemeinsame Tastgliederlängsachse definieren und relativ zueinander parallel zur Tastgliederlängsachse beweglich gelagert und infolge eines Kontakts mit dem Werkstück voneinander weg bewegbar sein. Die Tastgliederlängsachse kann vorzugsweise quer, insbesondere senkrecht, zur Schwerkraftrichtung verlaufen. Alternativ oder optional können die Tastglieder auch verschwenkbar oder rotierbar gelagert sein, beispielsweise um eine parallel zur Schwerkraftrichtung verlaufende Dreh- oder Schwenkachse. Spitzen der Tastglieder, die mit dem Werkstück in Kontakt treten können, können sich dann ebenso voneinander weg bewegen wie linear bewegbar gelagerte Tastglieder. Wie bereits oben erwähnt können auch Tastglieder in Form von Düsen oder Näherungssensoren vorgesehen werden, mit denen das Werkstück berührungslos vermessen werden kann. Vorteilhaft ist es, dass ein Zentrierelement bereitgestellt wird, welches eine Zentrierausnehmung aufweist, welche einen Einlaufbereich und einen Messbereich definiert, wenn das Werkstück während seiner Bewegung die Zentrierausnehmung zuerst im Einlaufbereich kontaktiert und das Zentrierelement dabei von der Grundstellung in die Messstellung überführt und dann im Messbereich in der Messstellung kontaktiert und wenn durch Messen des Abstands zwischen den Tastgliedern beim Durchlaufen des Messbereichs in der Messstellung die zu messende Abmessung des Werkstücks bestimmt wird. Das Werkstück wird also in beliebiger Weise transportiert und bewegt die Messeinrichtung im Zusammenwirken mit dem Zentrierelement in die für die Messung gewünschte Position. Der Einlaufbereich ist insbesondere so gestaltet, dass das Zentrierelement am Werkstück aufgleiten und durch dieses mit minimalen Kräften in die Messstellung bewegt werden kann. Ferner ist es günstig, dass ein Zentrierelement bereitgestellt wird, welches einen Auslaufbereich aufweist, wenn der Messbereich zwischen dem Einlaufbereich und dem Auslaufbereich angeordnet oder ausgebildet ist und wenn das Werkstück während seiner Bewegung die Zentrierausnehmung nach dem Messbereich im Auslaufbereich kontaktiert und dabei das Zentrierelement wieder aus der Messstellung in die Grundstellung zurückführt. Das Zurückführen kann beispielsweise erfolgen durch die auf das Zentrierelement wirkende Schwerkraft und/oder ein vorspannendes Element, entgegen dessen Wirkung das Werkstück das Zentrierelement aus der Grundstellung auslenkt. Günstig ist es, dass ein Zentrierelement bereitgestellt wird, dessen Zentrierausnehmung längs des Messbereichs einen konstanten Querschnitt aufweist. Auf diese Weise kann zumindest temporär eine eindeutige Positionierung zwischen dem Werkstück und dem Zentrierelement erreicht werden, ohne dass eine Relativbewegung zwischen denselben in einer Ebene quer zur Längsrichtung erfolgt. Vorteilhaft ist es, dass ein Zentrierelement mit einem Einlaufende und einem Auslaufende bereitgestellt wird und dass die Zentrierausnehmung längs des Einlaufbereichs einen sich ausgehend vom Einlaufende zum Messbereich hin verjüngenden Querschnitt aufweist, so dass das Zentrierelement ausgehend vom Einlaufende auf dem Werkstück aufgleitet und von der Grundstellung in die Messstellung überführt wird. Ein derartiges Zentrierelement bereitzustellen ermöglicht auf einfache Weise ein Aufgleiten des Zentrierelements am Werkstück, um die Messeinrichtung in die Messstellung zu überführen. Gemäß des erfindungsgemäßen Verfahrens ist vorgesehen, dass ein Zentrierelement bereitgestellt wird, dessen Zentrierausnehmung längs des Auslaufbereichs einen sich ausgehend vom Auslaufende zum Messbereich hin verjüngenden Querschnitt aufweist, und dass das Zentrierelement ausgehend vom Messbereich bis zum Auslaufende auf dem Werkstück aufliegt und auf diesem gleitet und dabei von der Messstellung in die Grundstellung zurückgeführt wird. Durch eine solche Ausgestaltung des Auslaufbereichs wird insbesondere ein schlagartiges Absenken des Zentrierelements verhindert, wenn das Werkstück den Messbereich vollständig durchlaufen hat. Günstig ist es, dass ein Zentrierelement bereitgestellt wird, bei welchem Messbereichnutseitenflächen der Zentrierausnehmung im Messbereich Messbereichnutseitenflächenebenen definieren, die sich längs einer Schnittgeraden schneiden, welche parallel oder im Wesentlichen parallel zur Längsrichtung verläuft. Auf diese Weise kann das Zentrierelement durch das Werkstück parallel zu seiner Längsrichtung beziehungsweise parallel zur Bewegungsrichtung oder Transportrichtung des Werkstücks ausgerichtet werden. Vorteilhaft ist es, dass ein Zentrierelement bereitgestellt wird, bei welchem Einlaufbereichnutseitenflächen der Zentrierausnehmung im Einlaufbereich Einlaufbereichnutseitenflächenebenen definieren, die sich längs einer Einlaufschnittgeraden schneiden, welche Einlaufschnittgerade mit der Längsrichtung einen Einlaufwinkel einschließt. Diese Ausgestaltung ermöglicht insbesondere die Ausbildung von Einlaufbereichnutseitenflächen, die gegenüber den Messbereichnutseitenflächen etwas geneigt sind und so Aufgleitflächen bilden, die auf dem Werkstück aufgleiten können, um so das Zentrierelement in die Messstellung zu bewegen. Ferner ist es günstig, dass ein Zentrierelement bereitgestellt wird, bei welchem Auslaufbereichnutseitenflächen der Zentrierausnehmung im Auslaufbereich Auslaufbereichnutseitenflächenebenen definieren, die sich längs einer Auslaufschnittgeraden schneiden, welche Auslaufschnittgerade mit der Längsrichtung einen Auslaufwinkel einschließt. Auch hier können die Auslaufbereichnutseitenflächen wieder Aufgleitflächen bilden, die auf dem Werkstück derart aufgleiten können, dass sich das Zentrierelement bei fortschreitender Bewegung des Werkstücks relativ zum Zentrierelement wieder kontinuierlich absenken kann.

Günstig ist es, wenn die zwei Tastglieder infolge des Kontakts mit dem Werkstück in Richtung einer Tastgliederlängsachse bewegt werden, die quer zur Längsrichtung verläuft. Insbesondere kann die Tastgliederlängsachse senkrecht zur Längsrichtung verlaufen. Ist das Werkstück mit seiner Längsachse durch die Zentriereinrichtung parallel zur Längsrichtung ausgerichtet, kann so beispielsweise ein Durchmesser des Werkstücks mittels der zwei Tastglieder bestimmt werden, die das Werkstück berühren. Dies kann alternativ auch berühungslos erfolgen mit Tastglieder in Form von Düsen oder Näherungssensoren.

Vorzugsweise wird ein Zentrierelement mit einer Zentrierausnehmung bereitgestellt, welche Zentrierausnehmung in Form einer Nut ausgebildet ist, welche nach unten weisend geöffnet ist, und welches Werkstück während seiner Bewegung die Nut kontaktiert und dabei das Zentrierelement relativ zu sich zentriert. Das Zentrierelement übergreift oder umgreift insbesondere das Werkstück bei einer Relativbewegung teilweise und wird so durch das Werkstück zwangsgeführt und zwangsbewegt.

Günstig ist es, wenn ein Zentrierelement mit einer Nut bereitgestellt wird, die in Form einer Keilnut ausgebildet ist und zwei relativ zueinander um einen Keilwinkel geneigte Nutseitenflächen aufweist, und wenn das Werkstück während seiner Bewegung die Nutseitenflächen kontaktiert und dabei das Zentrierelement relativ zu sich zentriert. Eine Keilnut ist insbesondere dann vorteilhaft, wenn ein rotationssymmetrisches oder im Wesentlichen rotationssymmetrisch ausgebildetes Werkstück vermessen werden soll. Durch Vorsehen der Keilnut gibt es somit genau zwei Berührpunkte oder Berührlinien, entlang derer das Werkstück das Zentrierelement berührt. Durch die zueinander geneigten Nutseitenflächen kann das Zentrierelement mit minimaler Reibung am Werkstück entlanggleiten. Beispielsweise kann ein Zentrierelement ganz oder teilweise aus einem Hartmetall bereitgestellt werden. Insbesondere bei Werkstücken aus Stahl kann mit einem Zentrierelement, welches zumindest im Bereich der am Werkstück entlanggleitenden Nutseitenflächen aus einem Hartmetall hergestellt ist, eine Reibung zwischen Werkstück und Zentrierelement minimiert werden. Vorzugsweise wird das Material des Zentrierelements so gewählt, dass eine Reibung zwischen dem Werkstück und dem Zentrierelement kleiner ist als zwischen dem Werkstück und beispielsweise einer Transporteinrichtung zum Bewegen des Werkstücks.

Gemäß einer weiteren bevorzugten Variante des Verfahrens kann vorgesehen sein, dass das Zentrierelement quer oder im Wesentlichen quer zur Schwerkraftrichtung und quer oder im Wesentlichen quer zur Längsrichtung beweglich gelagert wird, so dass das Zentrierelement infolge eines Kontakts mit dem zu vermessenden Werkstück quer oder im Wesentlichen quer zur Schwerkraftrichtung und quer oder im Wesentlichen quer zur Längsrichtung bewegt werden kann. Insbesondere kann das Zentrierelement senkrecht zur Schwerkraftrichtung und senkrecht zur Längsrichtung bewegt werden. Diese Variante des Verfahrens ermöglicht nicht nur eine Zentrierung des Zentrierelements parallel zur Schwerkraftrichtung, sondern auch quer zu dieser, so dass insgesamt eine Zentrierung des Zentrierelements durch das Werkstück in einer Ebene senkrecht zur Längsrichtung oder Transportrichtung möglich ist.

Vorzugsweise wird den beiden Tastgliedern mindestens ein Messkopf zugeordnet zum Messen einer Bewegung und/oder Auslenkung der beiden Tastglieder infolge eines Kontakts mit dem Werkstück. Mit dem Messkopf oder Messwertaufnehmer kann eine Bewegung oder Auslenkung der beiden Tastglieder relativ zueinander gemessen werden. Insbesondere ist eine automatische Messung möglich, so dass kontinuierlich eine Auswertung von Abmessungen von nacheinander am Zentrierelement vorbeigleitenden Werkstücken möglich ist.

Eine unabhängige Justage ist insbesondere dann auf einfache Weise möglich, wenn jedem der beiden Tastglieder ein eigener Messkopf zugeordnet wird.

Günstigerweise werden der mindestens eine Messkopf und das Zentrierelement in einer Messstellung miteinander unbeweglich gekoppelt. Damit wird aufgrund einer Bewegung des Zentrierelements relativ zum Werkstück auch der Messkopf relativ zum Werkstück in derselben Weise bewegt und positioniert.

Vorteilhaft ist es, wenn der mindestens eine Messkopf und das Zentrierelement relativ zueinander justierbar angeordnet werden zum Positionieren des mindestens einen Messkopfs und des Zentrierelements relativ zueinander in Abhängigkeit von Größe und Form des zu vermessenden Werkstücks. Diese Anordnung gestattet es insbesondere, den Messkopf relativ zum Zentrierelement so zu positionieren, dass er in Abhängigkeit von Größe und Form des zu vermessenden Werkstücks stets in der dafür erforderlichen Position angeordnet ist, wenn das Zentrierelement die Messstellung oder Messposition einnimmt. So kann insbesondere sichergestellt werden, dass stets ein maximaler Durchmesser des zu vermessenden Werkstücks, falls dieses rotationssymmetrisch ausgebildet ist, gemessen wird.

Günstig ist es, wenn freie, aufeinander zu weisende Enden der beiden Tastglieder in einer Ebene quer, zur Längsrichtung relativ zum Zentrierelement und/oder zum mindestens einen Messkopf in Abhängigkeit von Größe und Form des zu vermessenden Werkstücks justiert werden. Dies ermöglicht es insbesondere, die beiden Tastglieder so zu positionieren, dass sie in der Messstellung durch das Werkstück nur minimal ausgelenkt werden müssen. Auf diese Weise kann die Genauigkeit der Messung erhöht und auch eine Geschwindigkeit erhöht werden, mit der das zu vermessende Werkstück am Zentrierelement vorbei bewegt wird.

Um das Auslenken des Zentrierelements durch das Werkstück zu erleichtern, ist es vorteilhaft, wenn das Zentrierelement mit einem Ausgleichsgewicht gekoppelt wird. So muss mit dem Werkstück nicht eine der Gewichtskraft des Zentrierelements und an diesem angeordneter Teile entgegen gesetzt wirkende Kraft aufgebracht werden, um es nach oben zu bewegen, sondern nur noch die Differenz zwischen der Gewichtskraft des Zentrierelements und daran angeordneter Teile einerseits und der Gewichtskraft des Ausgleichsgewichts andererseits.

Vorteilhaft ist es, wenn eine Masse des Ausgleichsgewichts kleiner gewählt wird als eine Masse des Zentrierelements und aller mit diesem gekoppelten Teile und Elemente. So muss nur eine Kraft aufgebracht werden, die die Differenz zwischen dem Ausgleichsgewicht und dem Gewicht des Zentrierelements und aller mit diesem gekoppelten Teile und Elemente entspricht, um das Zentrierelement durch das Werkstück anzuheben oder zu bewegen.

Vorzugsweise wird das Zentrierelement oberhalb des bewegten Werkstücks angeordnet. Dies ermöglicht es insbesondere, die Messung an einer beliebigen Stelle einer Transportanlage zum Transportieren von zu vermessenden Werkstücken anzuordnen oder auszubilden. Es muss also nicht zwingend eine Veränderung an der Transportvorrichtung vorgenommen werden. Damit lässt sich das Verfahren prinzipiell an allen bewegten Werkstücken durchführen, ohne eine Position des Werkstücks auf einer es bewegenden Transporteinrichtung zu verändern.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines erfindungsgemäßen Systems;
- Figur 2:: eine schematische Ansicht der Anordnung aus Figur 1 in Richtung des Pfeils A;
- Figur 3:: eine schematische, vergrößerte Ansicht des Bereichs B in Figur 2;
- Figur 4A:: eine schematische Schnittansicht längs Linie 4-4 in Figur 3 beim Einlaufen eines Werkstücks unter die Zentrierlehre;
- Figur 4B:: eine schematische Schnittansicht längs Linie 4-4 in Figur 3 beim Durchlaufen des Werkstücks durch längs einer Messstrecke der Zentrierlehre;
- Figur 4C:: eine schematische Schnittansicht längs Linie 4-4 in Figur 3 beim Auslaufen des Werkstücks aus der Zentrierlehre;
- Figur 5A:: eine schematische, vergrößerte Ansicht der Zentrierlehre in Richtung des Pfeils A in Figur 1;
- Figur 5B:: eine schematische Schnittansicht längs Linie 5B-5B in Figur 5A;
- Figur 6:: eine vergrößerte perspektivische Teilansicht einer in Figur 1 dargestellten Messvorrichtung des Systems;
- Figur 7:: eine schematische Ansicht der Anordnung aus Figur 6 in Richtung des Pfeils C;
- Figur 8:: eine vergrößerte perspektivische Teilansicht der Anordnung aus Figur 6 von vorn;
- Figur 9:: eine schematische Schnittansicht längs Linie 9-9 in Figur 8;
- Figur 10:: eine schematische Schnittansicht längs Linie 10-10 in Figur 8;
- Figur 11:: eine schematische, vergrößerte Teilansicht der Anordnung aus Figur 6;
- Figur 12:: eine beispielshafte Ausschnittsansicht der Anordnung in Figur 11 in Richtung des Pfeils D;
- Figur 13:: eine Schnittansicht längs Linie 13-13 in Figur 11;
- Figur 14:: eine schematische vergrößerte Teilansicht der Anordnung aus Figur 6 von oben; und
- Figur 15:: eine Schnittansicht längs Linie 15-15 in Figur 14.

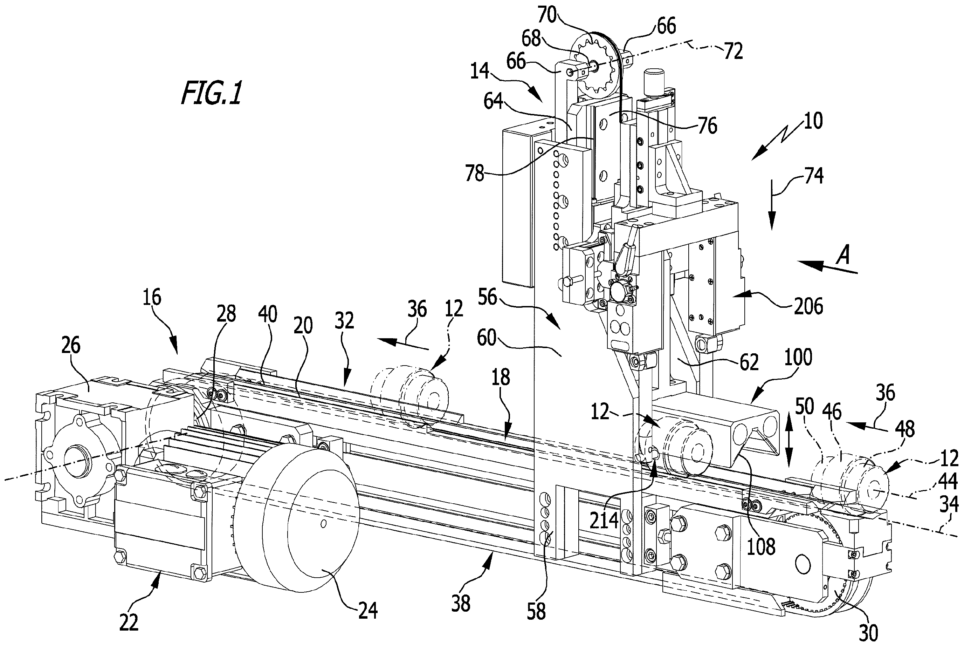

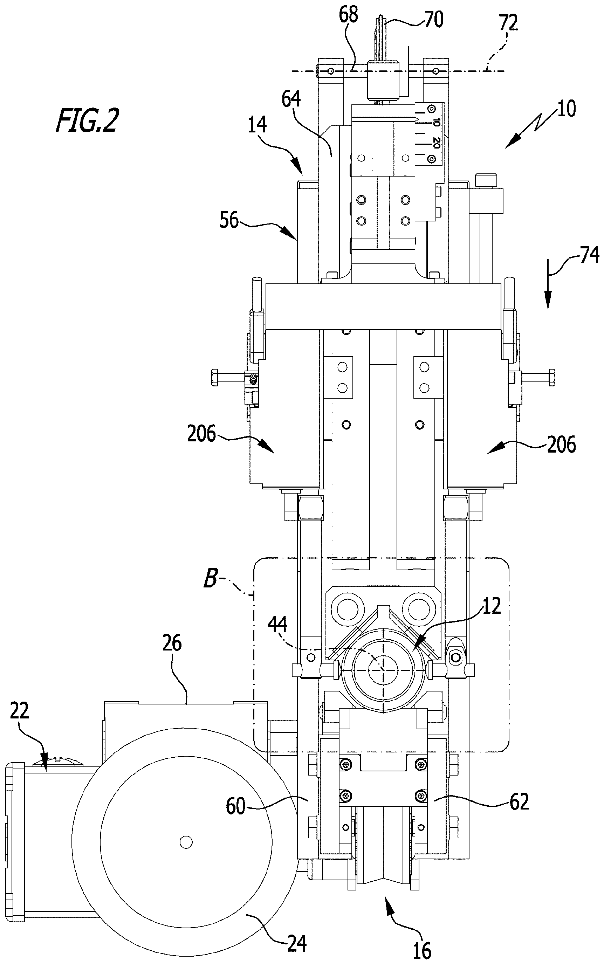

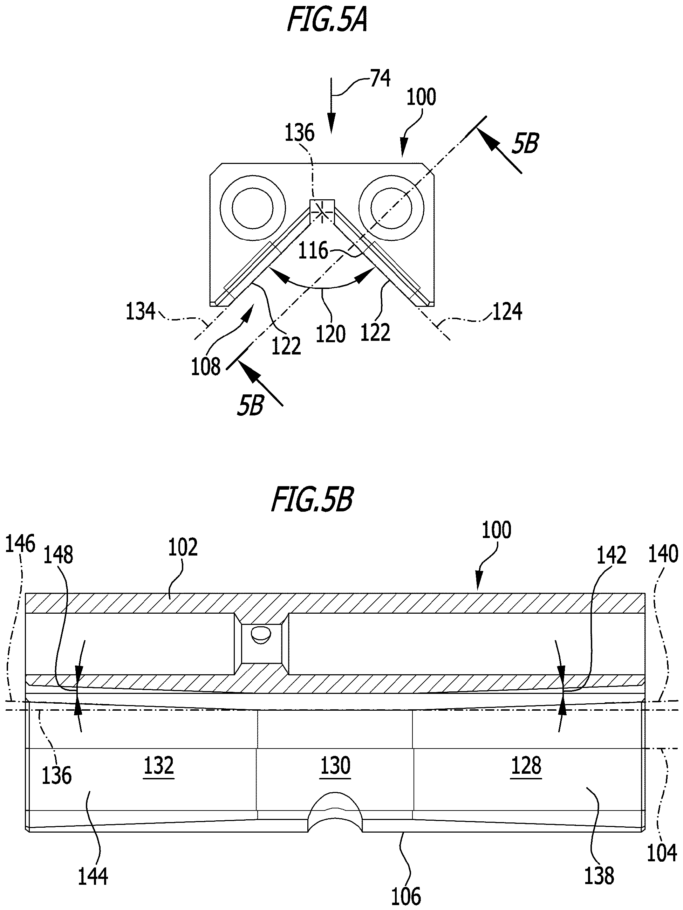

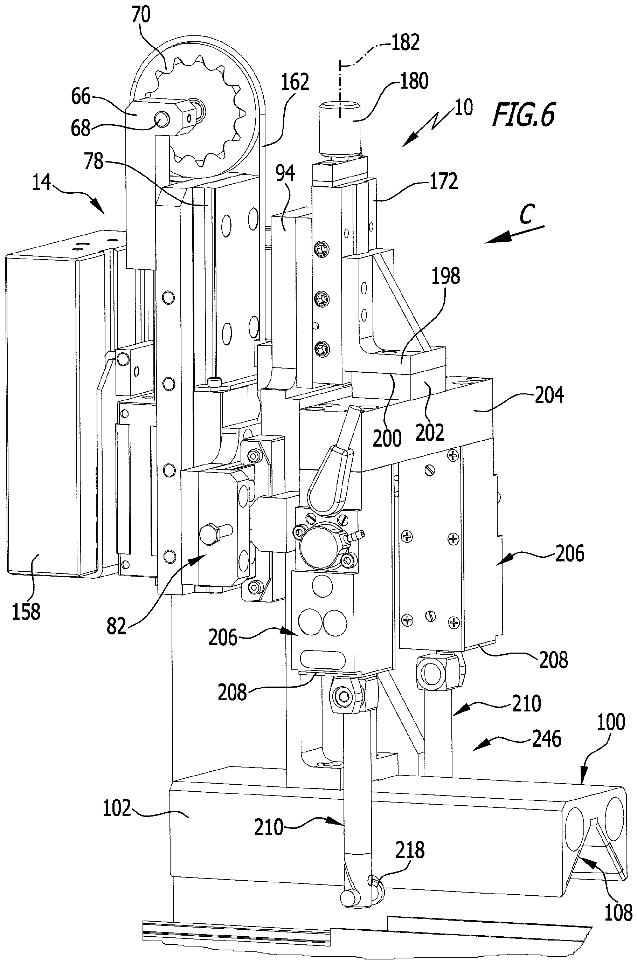

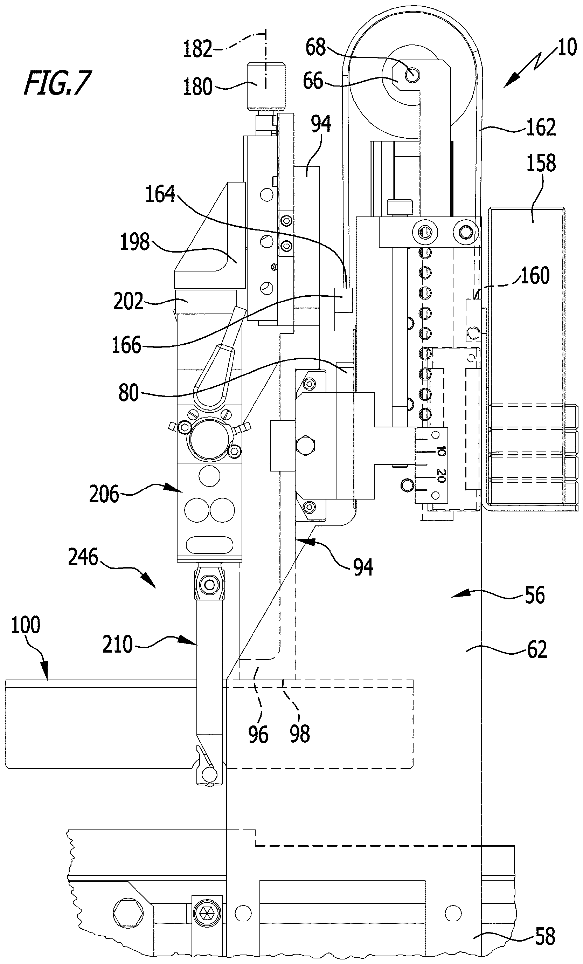

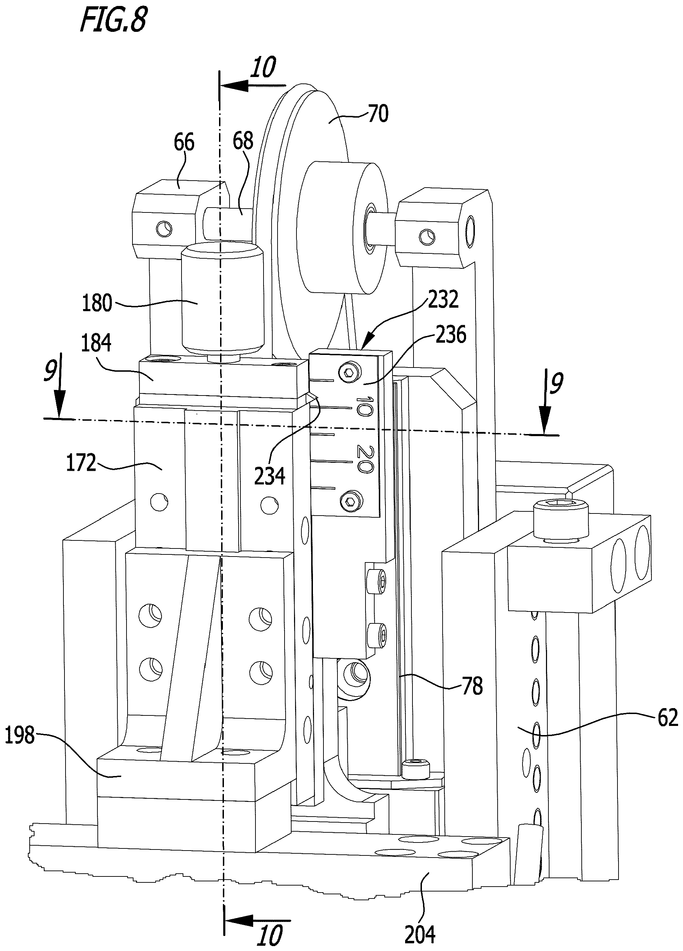

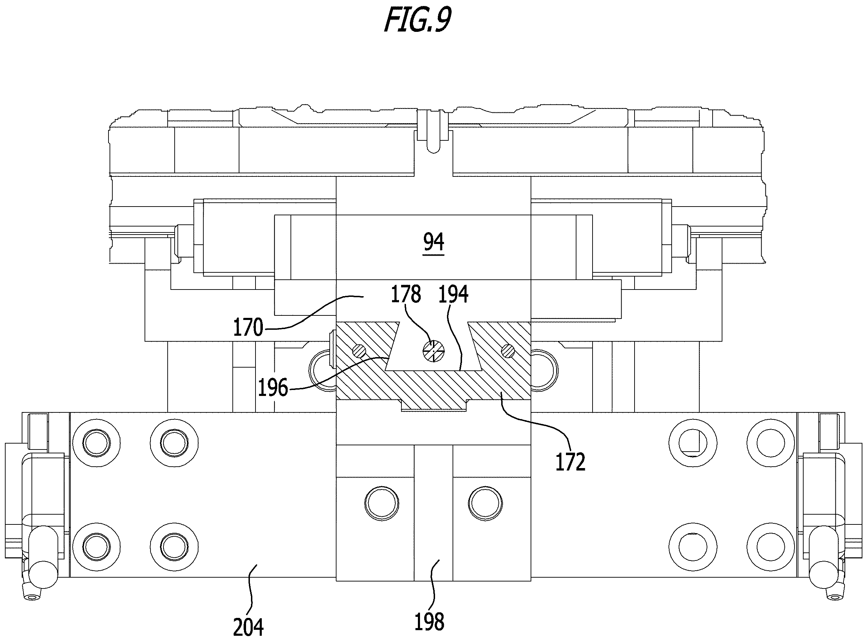

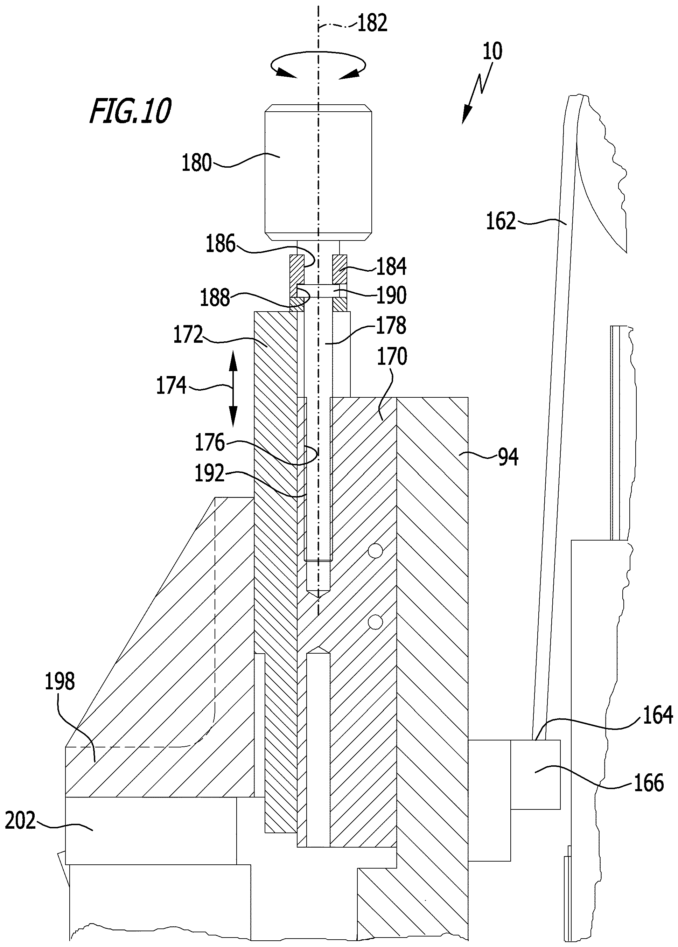

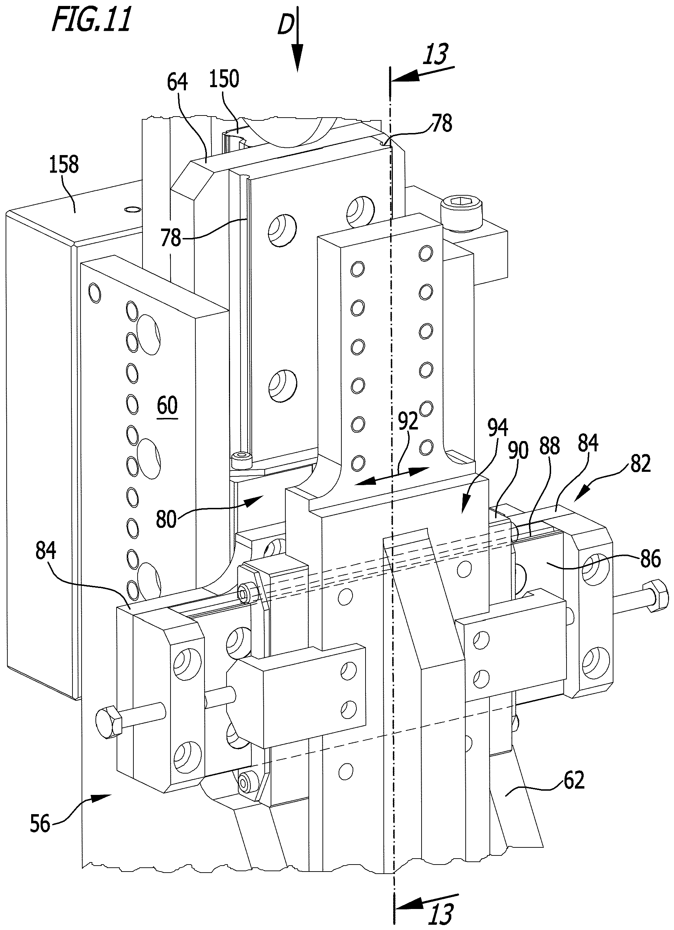

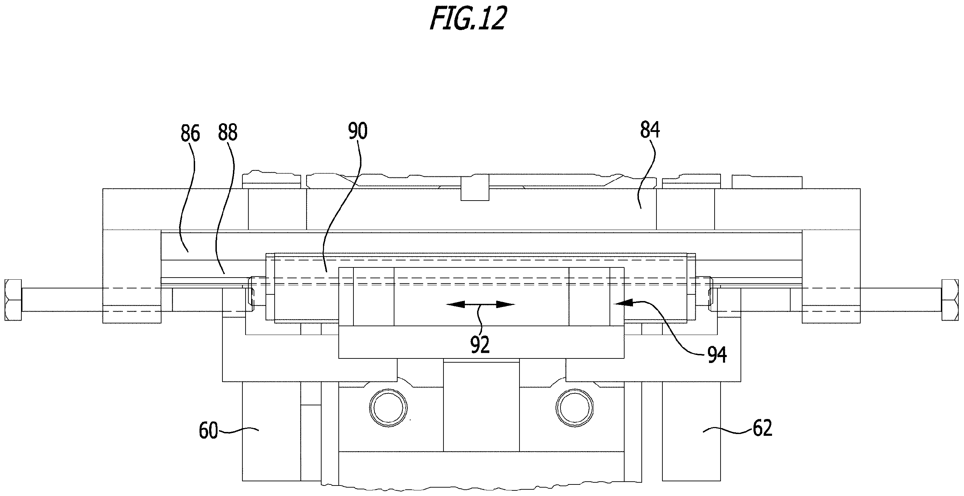

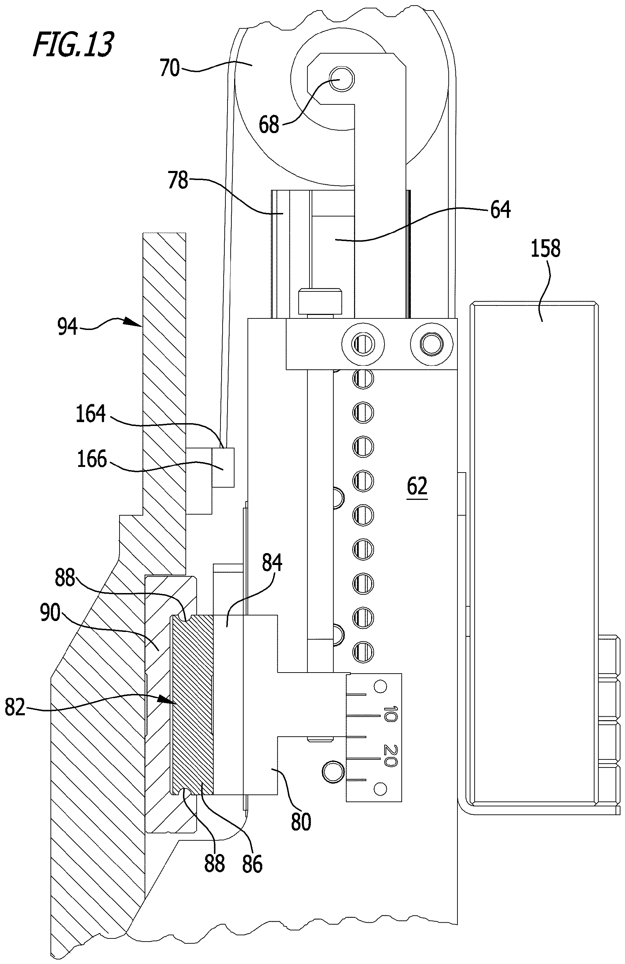

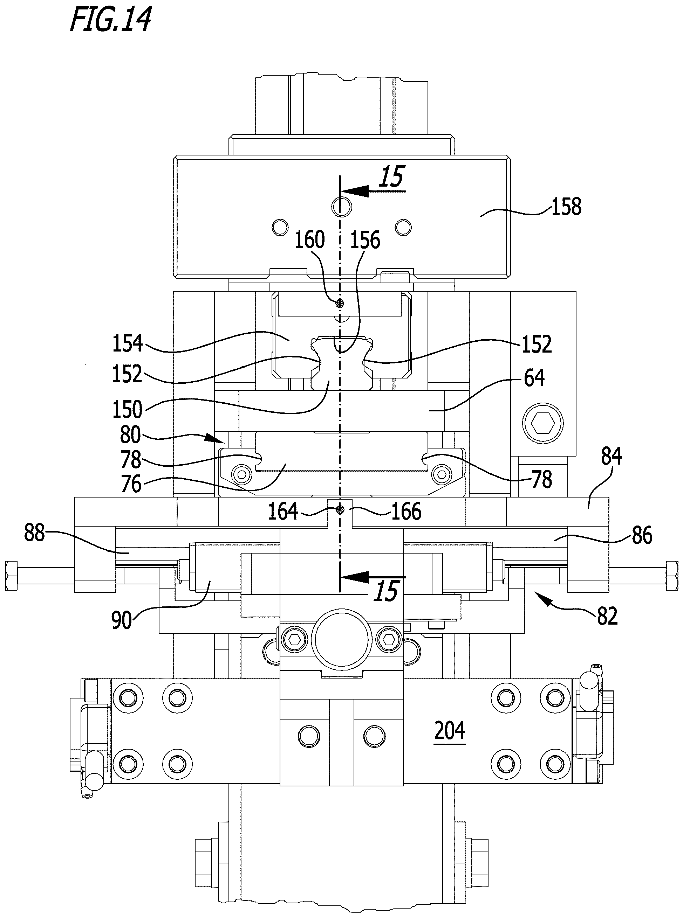

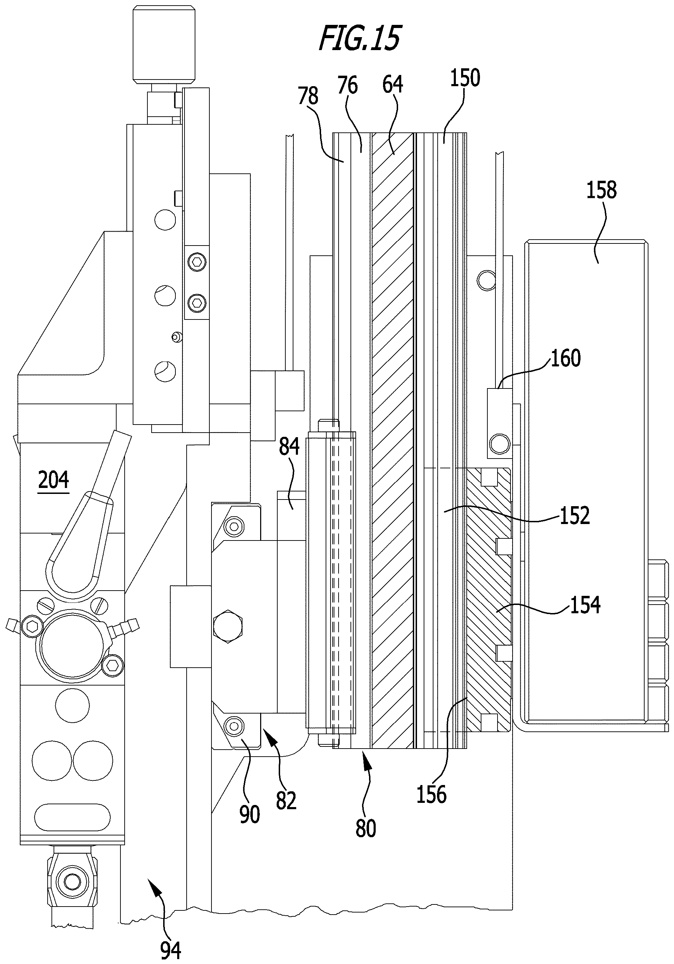

In den Figuren 1 bis 15 ist beispielhaft ein insgesamt mit dem Bezugszeichen 10 bezeichnetes System zur Messung einer Abmessung eines bewegten Werkstücks 12 dargestellt.

Das System 10 umfasst insbesondere eine Vorrichtung 14 zur Messung der Abmessung des Werkstücks 12, die in der im folgenden beschriebenen Weise an einer Transportvorrichtung 16 zum Bewegen des Werkstücks 12 anordenbar ist.

In Figur 1 ist die Transportvorrichtung 16 beispielhaft mit einem umlaufenden Transportelement 18 dargestellt, welches in Form eines vertieften Transportbandes 20 ausgebildet ist. Das Transportband 20 kann durch eine Antriebseinrichtung 22 umfassend einen mit einem Getriebe 26 gekoppelten Motor 24 über ein Antriebsrad 28 angetrieben werden kann.

Das endlose Transportband 20 ist zwischen dem Antriebsrad 28 und einer Umlenkrolle 30 gespannt und definiert einen oberen Transportvorrichtungsabschnitt 32, welcher sich parallel zu einer Gerade 34 erstreckt und längs dessen sich das Transportband 20 in Richtung der Pfeile 36 bewegt.

Das Transportband 20 weist ferner einen unteren Transportvorrichtungsabschnitt 38 auf, welcher sich vom Antriebsrad 28 zur Umlenkrolle 30 erstreckt und längs dessen das Transportband 20 entgegen der Transportrichtung bewegt wird.

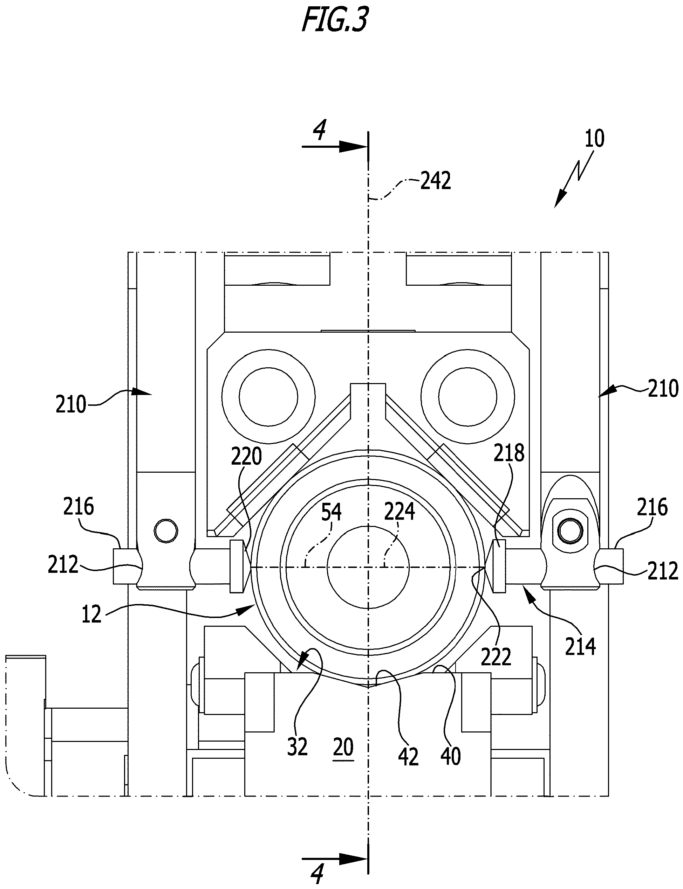

Auf einer Oberseite 40 des Transportbands 20 ist eine Vertiefung 42 ausgebildet, die sich parallel zur Geraden 34 erstreckt. Wie beispielsweise in Figur 3 schematisch dargestellt, zentriert sich so das mindestens abschnittsweise rotationsymmetrisch ausgebildete Werkstück 12 mit seiner durch den zu vermessenden rotationssymmetrischen Abschnitt 46 defierten Abmessung derart, dass die vom Abschnitt 46 definierte Längsachse 44 parallel zur Geraden 34 ausgerichtet wird.

Bei dem in den Figuren dargestellten Werkstücken 12 handelt es sich insgesamt um rotationssymmetrisch ausgebildete Werkstücke, die zwei den Abschnitt 46 zwischen sich begrenzende zylindrische Abschnitte 48 und 50 aufweisen, deren Außendurchmesser kleiner ist als ein Außendurchmesser 52 des Abschnitts 46. Der Außendurchmesser 52 ist bei dem in den Figuren beispielhaft dargestellten System 10 die zu messende Abmessung 54 des Werkstücks 12.

Die Vorrichtung 14 umfasst einen Rahmen 56, welcher beispielsweise an der Transporteinrichtung 16 festlegbar in üblicher Weise ist. In Figur 1 ist schematisch dargestellt, dass ein unterer Endbereich 58 des Rahmens zwischen dem oberen und dem unteren Transportvorrichtungsabschnitt 32 beziehungsweise 38 festgelegt ist.

Der Rahmen 56 umfasst eine in Transportrichtung gesehen linke Platte 60 und eine rechte Platte 62. Eine zwischen den Platten 60 und 62 eingesetzte Verbindungsplatte 64 verbindet die Platten 60 und 62 an ihrem oberen Ende.

Die Verbindungsplatte 64 definiert eine Ebene, die quer zur Transportrichtung verläuft. In Transportrichtung gesehen hinter der Verbindungsplatte 64 sind zwei Lagerböcke 66 angeordnet, die eine Lagerwelle 68 halten, auf welcher eine Umlenkrolle 70 rotierbar gelagert ist.

Die Lagerwelle 78 definiert eine Längsachse 72, die quer zur Transportrichtung und quer zur Schwerkraftrichtung 74 verläuft.

Die Verbindungsplatte 64 trägt auf ihrer Vorderseite eine Führungsplatte 76 mit zwei voneinander weg weisenden, quer zur Schwerkraftrichtung 74 sowie zur Transportrichtung weisend geöffneten Führungsnuten 78. An der Führungsplatte 76 ist ein Vertikalschlitten 80 parallel zur Schwerkraftrichtung 74 verschieblich gelagert, mit in die Führungsnuten 78 eingreifenden Vorsprüngen.

Der Vertikalschlitten 80 trägt eine Horizontalführungseinrichtung 82 mit einer Trägerplatte 84, die direkt auf dem Vertikalschlitten 80 montiert ist. An der Trägerplatte 84 ist eine weitere Führungsplatte 86 montiert, die zwei voneinander weg weisend geöffnete Führungsnuten 88 aufweist, die quer zur Schwerkraftrichtung 74 und zur Transportrichtung verlaufen. Sie dienen zur Führung von Vorsprüngen an einem Horizontalschlitten 90, welcher somit in Richtung des Doppelpfeils 92 quer zur Schwerkraftrichtung 74 und quer zur Transportrichtung relativ zum Vertikalschlitten 80 beweglich gelagert ist.

Der Horizontalschlitten 90 trägt einen Haltearm 94, welcher sich im Wesentlichen parallel zur Schwerkraftrichtung 74 erstreckt. Ein unteres Ende des Haltearms 94 ist abgewinkelt und bildet einen parallel zur Transportrichtung verlaufenden Halteabschnitt 96, der entgegen dem Pfeil 36. An der Unterseite 98 des Halteabschnitts 96 ist ein Zentrierelement 100 angeordnet.

Das Zentrierelement 100 ist im Wesentlichen in Form eines langgestreckten, quaderförmigen Zentrierkörpers 102 ausgebildet, der eine Längsrichtung 104 definiert, die parallel zur Transportrichtung ausgerichtet ist. Ausgehend von einer Unterseite 106 des Zentrierkörpers 102, welche auf das Transportband 20 hin weist, ist am Zentrierelement 100 eine Zentrierausnehmung 108 ausgebildet.

Die Zentrierausnehmung 108 definiert insgesamt drei Bereiche, nämlich einen Einlaufbereich 110, einen Messbereich 112 und einen Auslaufbereich 114.

Die Zentrierausnehmung 108 ist in Form einer Nut 116 ausgebildet, welche nach unten, in Richtung auf das Transportband 20 hin weisend, geöffnet ist. Die Nut 116 ist in Form einer Keilnut 118 ausgebildet und weist zwei relativ zueinander um einen Keilwinkel 120 geneigte Nutseitenflächen 122 auf.

Das Zentrierelement 100 ist spiegelsymmetrisch zu einer durch die Schwerkraftrichtung 74 und die Längsrichtung 104 aufgespannten Ebene ausgebildet.

Der Keilwinkel 120 weist vorzugsweise einen Wert in einem Bereich von etwa 70° bis 110° auf. Bei dem in den Figuren schematisch dargestellten Ausführungsbeispiel des Systems 10 beträgt der Keilwinkel 120 etwa 90°.

Der Einlaufbereich 110 erstreckt sich ausgehend von einem Einlaufende 124 des Zentrierkörpers 102. Der Auslaufbereich 114 erstreckt sich bis zu einem Auslaufende 126 des Zentrierkörpers 100.

Die Nutseitenflächen 122 werden durch Einlaufbereichnutseitenflächen 128 im Einlaufbereich 110, Messbereichnutseitenflächen 130 im Messbereich 112 und Auslaufbereichnutseitenflächen 132 im Auslaufbereich 114 definiert. Diese sind derart ausgebildet, dass die Zentrierausnehmung 108 längs des Messbereichs 112 einen konstanten Querschnitt aufweist, längs des Einlaufbereichs 110 einen sich ausgehend vom Einlaufende 124 zum Messbereich 112 hin verjüngenden Querschnitt und einen längs des Auslaufbereichs 114 sich ausgehend vom Auslaufende 126 zum Messbereich 112 hin verjüngenden Querschnitt.

Die Messbereichnutseitenflächen 130 definieren Messbereichnutseitenflächenebenen, die sich längs einer Schnittgerade 136 schneiden, die parallel zur Längsrichtung 104 verläuft.

Die Einlaufbereichnutseitenflächen 128 definieren Einlaufbereichnutseitenflächenebenen 140, die sich längs einer Einlaufschnittgeraden 140 schneiden. Die Einlaufschnittgerade 140 schließt mit der Schnittgerade 136 einen Einlaufwinkel 142 ein.

Die Auslaufbereichnutseitenflächen 132 definieren Auslaufbereichnutseitenflächenebenen 144, die sich längs einer Auslaufschnittgeraden 146 schneiden. Die Auslaufschnittgerade 146 schließt mit der Schnittgerade 136 einen Auslaufwinkel 148 ein.

Der Einlaufwinkel 142 und der Auslaufwinkel 148 sind vorzugsweise identisch und weisen insbesondere einen Wert in einem Bereich von etwa 1° bis etwa 5° auf. Bei dem in den Figuren schematisch dargestellten Zentrierelement 100 betragen der Einlaufwinkel 142 und der Auslaufwinkel 148 jeweils etwa 3°.

Die Einlaufbereichnutseitenflächen 128 und die Auslaufbereichnutseitenflächen 132 bilden jeweils Aufgleitflächen, die mit dem Werkstück 12, insbesondere dessen Abschnitt 46, in Kontakt treten können.

An der Verbindungsplatte 64 ist zwischen den Lagerböcken 66 eine Führungsschiene 150 in Transportrichtung abstehend angeordnet, welche zwei sich parallel zur Schwerkraftrichtung 74 erstreckende, voneinander weg weisend quer zur Längsrichtung 104 geöffnete Führungsnuten 152 aufweist. An der Führungsschiene 150 ist ein Führungskörper 154 mit einer korrespondierend zur Führungsschiene 150 ausgebildeten Führungsnut 156 parallel zur Schwerkraftrichtung 74 verschieblich gelagert.

Am Führungskörper 154 ist von der Verbindungsplatte 64 weg weisend ein im Wesentlichen quaderförmiges Ausgleichsgewicht 158 angeordnet. An diesem ist ein erstes Ende 160 eines Verbindungsseils 162 festgelegt, welches über die Umlenkrolle 70 geführt ist.

Ein zweites Ende 164 des Verbindungsseils 162 ist oberhalb des Vertikalschlittens 80 an einem vom Haltearm 94 in Richtung auf die Führungsplatte 76 hin vorstehenden Lagervorsprung 166 befestigt.

Im oberen Endbereich des Haltearms 94 ist auf einer Vorderseite, also bezogen auf den Lagervorsprung 66 in entgegengesetzter Richtung weisend, eine Justiereinrichtung 166 angeordnet. Diese umfasst eine mit dem Haltearm 94 fest verbundene Grundplatte 176, auf welcher ein Justierschlitten 172 in Richtung des Doppelpfeils 174 verfahrbar gelagert ist.

In der Grundplatte 170 ist eine Gewindebohrung 176 parallel zur Schwerkraftrichtung 76 ausgebildet. In diese ist eine Gewindespindel 178 eingeschraubt, welche an ihrem oberen Ende einen Drehknopf 180 aufweist. Die Gewindespindel 178 kann so um ihre Längsachse 182 verdreht werden.

Am oberen Ende des Justierschlittens 172 ist ein Querbalken 184 ausgebildet, welcher mit einer Bohrung 186 parallel zur Längsachse 182 versehen ist. Am Querbalken 184 ist im Inneren im Bereich der Bohrung 186 eine in Richtung auf die Längsachse 182 hin geöffnete Ringnut 188 ausgebildet, in welche ein in radialer Richtung weisender Ringflansch 190 im aus dem Justierschlitten 172 vorstehenden, zylindrischen und ohne Außengewinde ausgebildeten Abschnitt der Gewindespindel 178 eingreift. So ist die Gewindespindel 178 am Justierschlitten 172 um die Längsachse 178 rotierbar gelagert und kann mit ihrem Außengewinde 192 in die Gewindebohrung 176 eingeschraubt werden. Durch Rotation des Drehknopfs 180 um die Längsachse 182 im Uhrzeigersinn wird der Justierschlitten 172 in Richtung auf das Zentrierelement 100 hin bewegt, infolge einer Rotation entgegen der Uhrzeigerrichtung vom Zentrierelement 100 weg.

Der Justierschlitten 172 weist eine schwalbenschwanzförmige Nut 194 auf, die Grundplatte 170 einen zur Nut 194 korrespondierenden schwalbenschwanzförmigen Vorsprung 196, die sich parallel zur Schwerkraftrichtung 74 erstrecken und miteinander in Eingriff stehen.

Vom Justierschlitten 172 steht entgegen der Transportrichtung ein L-förmiger Haltewinkel 198 ab, an dessen Unterseite 200 über einen quaderförmigen Zwischenkörper 202 ein Querträger 204 gehalten ist. Von diesem stehen nach unten zwei Messköpfe 206 ab, aus deren unteren Enden 208 jeweils ein Tastglied 210 vorsteht.

Die stabförmigen Tastglieder 210 verlaufen mit ihrer Längsachse parallel zur Schwerkraftrichtung 74 und weisen an ihrem unteren Ende Querbohrungen 212 auf, in welchen Tastspitzen 214 gehalten sind. Diese weisen einen zylindrischen Grundkörper 216 auf, dessen Außendurchmesser zum Innendurchmesser der Querbohrung 212 korrespondiert, sowie einen in Richtung auf die jeweils andere Tastspitze 214 hin weisenden Tastkopf 218 mit einer in Richtung auf den jeweils anderen Tastkopf 218 hin weisenden, im Wesentlichen kegelförmigen Endfläche 220, so dass jeweils eine Spitze 222 an den Tastgliedern 210 definiert wird.

Die Tastglieder 210 sind an den Messköpfen 206 beweglich gelagert und können in einer von den Grundkörpern 216 gemeinsam definierten Tastgliederlängsachse 224 sowohl quer zur Schwerkraftrichtung 74 als auch quer zur Längsrichtung 104 ausgelenkt werden. Alternativ können die stabförmigen Tastglieder 210 auch um eine von ihnen definierte Längsachse an den Messköpfen 206 verschwenkbar oder verdrehbar ausgebildet sind. Auf diese Weise können die Spitzen 222 ebenfalls infolge eines Kontakts mit dem Werkstück 12 voneinander weg bewegt werden, nämlich durch eine Verdrehung um die Längsachse der stabförmigen Tastglieder 210.

Die Grundkörper 216 können in gewünschter Weise relativ zu den Tastgliedern 210 verschoben und an diesen dann fixiert werden.

Die Messköpfe 206 umfassen Messwertaufnehmer, um eine Auslenkung der Tastglieder 210 zu messen. Hierfür sind sie in nicht dargestellter Weise elektrisch mit einer Recheneinrichtung verbunden.

Die Funktionsweise des Systems 10 wird nachfolgend näher beschrieben.

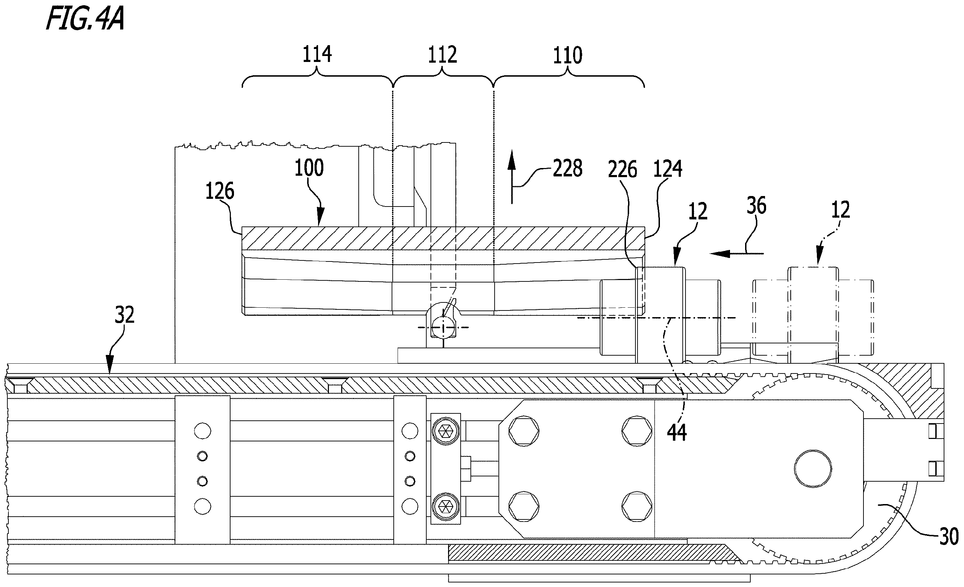

In einer Grundstellung der Vorrichtung 14 befindet sich das Zentrierelement 100 in einer maximal abgesenkten Stellung, wie sie schematisch in Figur 4A dargestellt ist.

Bewegt die Transporteinrichtung 16 ein Werkstück 12 in Transportrichtung, also in Richtung des Pfeils 36, kommt eine in Transportrichtung weisende Kante 226 des Abschnitts 46 zunächst im Einlaufbereich 110 mit den Einlaufbereichnutseitenflächen 128 in Kontakt.

Das Ausgleichsgewicht 158 ist so gewählt, dass es ein wenig leichter ist als die gesamte am Vertikalschlitten 80 festgelegte Anordnung. Zum Anheben des Zentrierelements 100 wird daher nur eine Kraft benötigt, die der Differenz zwischen dem Gewicht des Ausgleichsgewichts 158 und dem Gesamtgewicht des Vertikalschlittens 80 mit allen daran festgelegten Teilen entspricht.

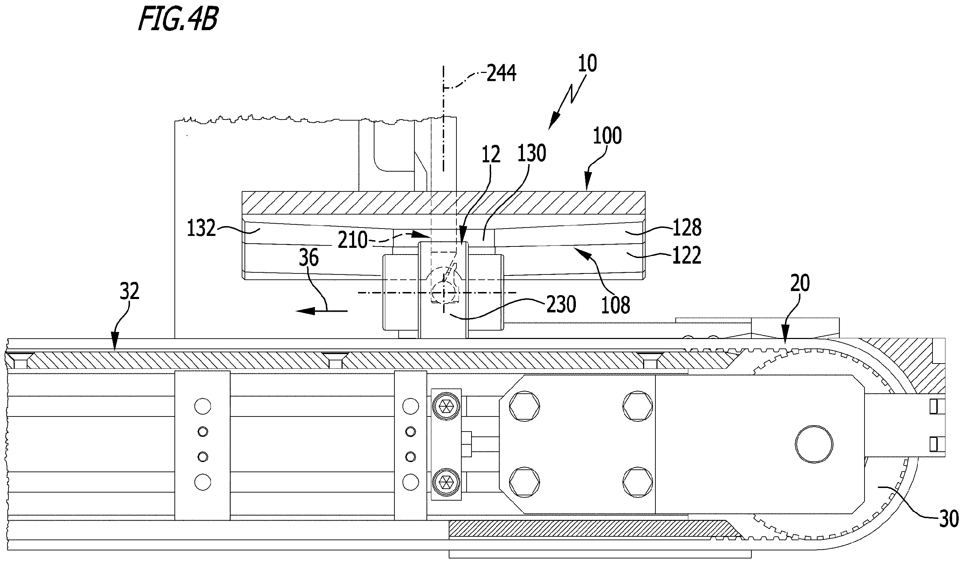

Wird das Werkstück 12 weiter transportiert, gleiten die Einlaufbereichnutseitenflächen 128 am Werkstück 12 weiter auf, bis die Kante 226 den Messbereich 112 erreicht. Nun kommt es zu einer linienförmigen Anlage des Abschnitts 46 an jeder der beiden Messbereichnutseitenflächen 130. Dies ist schematisch in Figur 4B dargestellt.

Das Zentrierelement 100 nimmt nun die Messstellung oder Messposition ein, in welcher es maximal entgegen der Schwerkraftrichtung 74, also in Richtung des Pfeils 228, ausgelenkt ist.

Der Abschnitt 46 kommt jedoch nicht nur mit den Nutseitenflächen 122 in Kontakt, sondern auch mit den Tastköpfen 218. Die Endflächen 220 gleiten ebenfalls an der Kante 226 auf, bis die Spitzen 222 an einer Außenseite 230 des Abschnitts 46 aufgleiten. Die Tastglieder 210 werden dabei etwas ausgelenkt und voneinander weg bewegt. Die Auslenkung der Tastglieder 210 wird mit den Messköpfen 206 gemessen und so der Außendurchmesser 52 des Werkstücks ermittelt.

Für eine möglichst genaue Messung ist es wichtig, mit der Justiereinrichtung 168 die Messköpfe 206 so zu positionieren, dass die Spitzen 222 genau auf Höhe des Außendurchmessers 52 des Werkstücks 12 positioniert sind.

Je größer der Außendurchmesser 52 des Abschnitts ist, umso weiter wird mit der Justiereinrichtung 168 der Tastkopf 218 entgegen der Schwerkraftrichtung nach oben verstellt. Eine Anzeigeeinrichtung 232, die eine Zeigespitze 234 aufweist, die vom Justierschlitten 172 seitlich absteht und auf einen Maßstab 236 weist, ermöglicht eine präzise Positionierung der Spitzen 222 relativ zum Zentrierelement 100, welches unabhängig von einer Gestaltung des Transportbands 20 die Lage des maximalen Außendurchmessers 52 längs des Messbereichs 112 definiert.

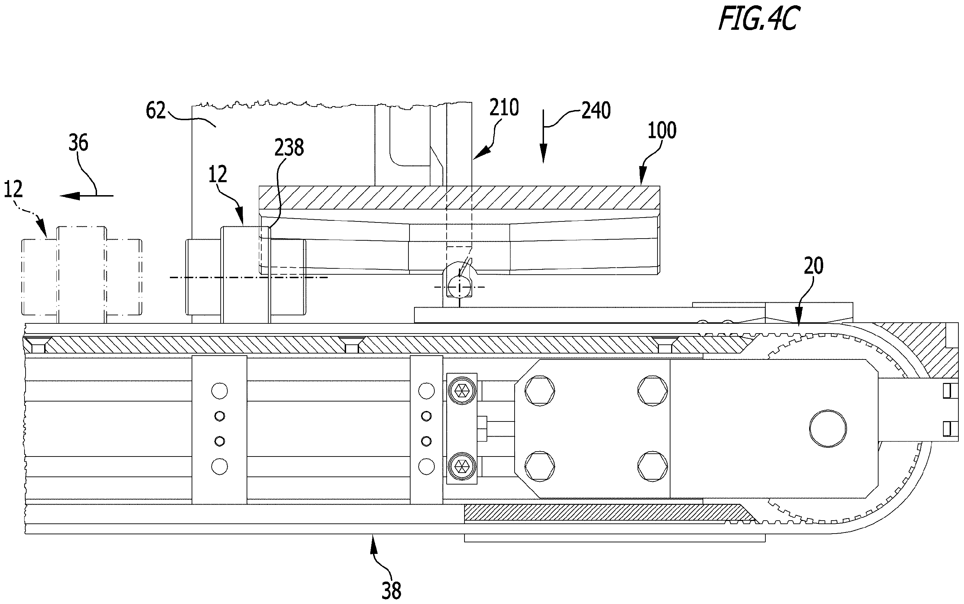

Nach Durchlaufen des Messbereichs 112, was schematisch in Figur 4B dargestellt ist, gleitet eine entgegen der Transportrichtung gerichtete Kante 238 des Abschnitts 46 an den Auslaufbereichnutseitenflächen 132 entlang. Die sich zum Auslaufende 126 hin erweiternde Zentrierausnehmung 108 führt dann wieder zu einem Absenken des Zentrierelements 100 in Richtung des Pfeils 240 wie beispielhaft in Figur 4C dargestellt.

Bei dem dargestellten System 10 bewirkt allein die Gewichtskraft des Vertikalschlittens 80 mit allen daran angeordneten Elementen das Absenken des Zentrierelements 100. Alternativ oder zusätzlich ist es auch denkbar, ein vorspannendes Element, beispielsweise in Form einer Druck- oder Zugfeder vorzusehen, entgegen deren Wirkung das Zentrierelement 100 bei in Kontakt treten mit dem Werkstück 12 aus seiner maximal abgesenkten Grundstellung ausgelenkt und angehoben werden kann.

Der Horizontalschlitten 90 ermöglicht zusätzlich einen horizontalen Ausgleich und eine horizontale Positionierung des Zentrierelements 100, falls das Werkstück 12 mit seiner Längsachse 44 etwas seitlich versetzt zu einer Symmetrieebene 242 des Transportbands 20 auf diesem lagert.

Das Zentrierelement 100 ist somit insgesamt in einer Zentrierebene 244, die senkrecht zur Längsrichtung 104 verläuft, im Rahmen der durch den Vertikalschlitten 80 und den Horizontalschlitten 90 vorgegebenen Maximalauslenkungen beliebig bewegbar.

Mit dem System 10 lässt sich somit in der beschriebenen Weise die Abmessung 54, beispielsweise der Außendurchmesser 52, des Abschnitts 46 des Werkstücks 12 mechanisch durch Abtasten messen. Dies erfolgt insbesondere mit einer Messeinrichtung 246, welche die beiden Tastglieder 210 umfasst, die relativ zueinander parallel zur Tastgliederlängsachse 224 beweglich gelagert sind oder um eine von den stabförmigen Tastgliedern 210 definierte Längsachse verdrehbar an den Messköpfen 206 gelagert sind.

Das der Messeinrichtung 246 zugeordnete Zentrierelement 100 ist wie beschrieben insbesondere in einer Richtung parallel zur Schwerkraftrichtung 74 zusammen mit der Messeinrichtung 246 beweglich gelagert und kann durch das Zentrierelement 100 infolge eines Kontakt mit dem zu vermessenden Werkstück 12 entgegen der Schwerkraftrichtung 74 aus einer maximal abgesenkten Grundstellung in eine Messstellung oder Messposition ausgelenkt werden.

Es wird dann der Abstand zwischen den Tastgliedern 210 bestimmt, die insbesondere infolge eines Kontakts mit dem Werkstück 12 voneinander weg bewegbar sind.

Der zu bestimmende Außendurchmesser 52 entspricht dem Abstand zwischen den Spitzen 222 der Tastspitzen 214 in einer durch das Werkstück 12 maximal ausgelenkten Stellung. Entweder kann dieser Abstand durch die Messeinrichtung 246 direkt gemessen werden mittels der Messköpfe 206 oder es kann der Außendurchmesser 52 berechnet werden durch Messen der jeweiligen Auslenkung der Tastglieder 210 relativ zu den Messköpfen 206 und Bildung der Summe des Abstands zwischen den Spitzen 222 in der nicht ausgelenkten Grundstellung und der jeweils gemessenen Auslenkungen der beiden Tastglieder 210 in der in den Figuren 3 und 4B dargestellten Messstellung.

Die Messung der Auslenkung der Tastglieder 210 kann insbesondere zeitabhängig erfolgen, so dass während des Entlanggleitens der Spitzen 222 am Abschnitt 46 die Auslenkung der Tastglieder 210 zeitabhängig gemessen und über die Länge des Abschnitts 46 parallel zur Längsrichtung 104 ein Mittelwert des Außendurchmessers 52 bestimmt werden kann.

Das Zentrierelement 100 wird vorzugsweise aus einem Material hergestellt, welches eine möglichst geringe Reibung in Verbindung mit dem zu vermessenden Werkstück 12 aufweist. Beispielsweise kann es bei Werkstücken 12, die aus Stahl hergestellt sind, ganz oder teilweise aus einem Hartmetall hergestellt sein. Insbesondere können die Seitenflächen 122 flache Vertiefungen aufweisen, in die jeweils ein sich parallel zur Längsrichtung 104 erstreckender Hartmetallstreifen eingesetzt ist.

### Bezugszeichenliste

- 10: System
- 12: Werkstück
- 14: Vorrichtung
- 16: Transporteinrichtung
- 18: Transportelement
- 20: Transportband
- 22: Antriebseinrichtung
- 24: Motor
- 26: Getriebe
- 28: Antriebsrad
- 30: Umlenkrolle
- 32: Oberer Transportvorrichtungsabschnitt
- 34: Gerade
- 36: Pfeil
- 38: Unterer Transportvorrichtungsabschnitt
- 40: Oberseite
- 42: Vertiefung
- 44: Längsachse
- 46: Abschnitt
- 48: Abschnitt
- 50: Abschnitt
- 52: Außendurchmesser
- 54: Abmessung
- 56: Rahmen
- 58: Endbereich
- 60: linke Platte
- 62: rechte Platte
- 64: Verbindungplatte
- 66: Lagerbock
- 68: Lagerwelle
- 70: Umlenkrolle
- 72: Längsachse
- 74: Schwerkraftrichtung
- 76: Führungsplatte
- 78: Führungsnut
- 80: Vertikalschlitten
- 82: Horizontalführungseinrichtung
- 84: Trägerplatte
- 86: Führungsplatte
- 88: Führungsnut
- 90: Horizontalschlitten
- 92: Doppelpfeil
- 94: Haltearm
- 96: Halteabschnitt
- 98: Unterseite
- 100: Zentrierelement
- 102: Zentrierkörper
- 104: Längsrichtung
- 106: Unterseite
- 108: Zentrierausnehmung
- 110: Einlaufbereich
- 112: Messbereich
- 114: Auslaufbereich
- 116: Nut
- 118: Keilnut
- 120: Keilwinkel
- 122: Nutseitenfläche
- 124: Einlaufende
- 126: Auslaufende
- 128: Einlaufbereichnutseitenfläche
- 130: Messbereichnutseitenfläche
- 132: Auslaufbereichnutseitenfläche
- 134: Messbereichnutseitenflächenebene
- 136: Schnittgerade
- 138: Einlaufbereichnutseitenflächenebene
- 140: Einlaufschnittgerade
- 142: Einlaufwinkel
- 144: Auslaufbereichnutseitenflächenebene
- 146: Auslaufschnittgerade
- 148: Auslaufwinkel
- 150: Führungsschiene
- 152: Führungsnut
- 154: Führungskörper
- 156: Führungsnut
- 158: Ausgleichsgewicht
- 160: Ende
- 162: Verbindungsseil
- 164: Ende
- 166: Lagervorsprung
- 168: Justiereinrichtung
- 170: Grundplatte
- 172: Justierschlitten
- 174: Doppelpfeil
- 176: Gewindebohrung
- 178: Gewindespindel
- 180: Drehknopf
- 182: Längsachse
- 184: Querbalken
- 186: Bohrung
- 188: Ringnut
- 190: Ringflansch
- 192: Außengewinde
- 194: Nut
- 196: Vorsprung
- 198: Haltewinkel
- 200: Unterseite
- 202: Zwischenkörper
- 204: Querträger
- 206: Messkopf
- 208: Ende
- 210: Tastglied
- 212: Querbohrung
- 214: Tastspitze
- 216: Grundkörper
- 218: Tastkopf
- 220: Endfläche
- 222: Spitze
- 224: Tastgliederlängsachse
- 226: Kante
- 228: Pfeil
- 230: Außenseite
- 232: Anzeigeeinrichtung
- 234: Zeigespitze
- 236: Maßstab
- 238: Kante
- 240: Pfeil
- 242: Symmetrieebene
- 244: Zentrierebene
- 246: Messeinrichtung

## Patentansprüche

1. System (10) zur Messung einer Abmessung (54) eines längs einer geradlinigen Bewegungsbahn bewegten Werkstücks (12), umfassend eine Vorrichtung (14) zur Messung der Abmessung (54) des Werkstücks (12), wobei die Vorrichtung (14) ein Zentrierelement (100) und zwei diesem zugeordnete Tastglieder (210) umfasst, wobei das Zentrierelement (100) derart angeordnet und ausgebildet ist, dass es eine parallel oder im Wesentlichen parallel zur Bewegungsbahn verlaufende Längsrichtung (104) definiert, wobei die Längsrichtung quer, insbesondere senkrecht, zur Schwerkraftrichtung (74) verläuft, wobei die zwei Tastglieder (210) beweglich gelagert und infolge eines Kontakts mit dem Werkstück (12) voneinander weg bewegbar sind, wobei das Zentrierelement (100) in einer Richtung parallel oder im Wesentlichen parallel zur Schwerkraftrichtung (74) beweglich gelagert und infolge eines Kontakts mit dem Werkstück (12) entgegen der Schwerkraftrichtung (74) bewegbar ist, wobei das Zentrierelement (100) eine Zentrierausnehmung (108) aufweist, welche einen Einlaufbereich (110) und einen Messbereich (112) definiert, wobei das Zentrierelement (100) einen Auslaufbereich (114) aufweist und wobei der Messbereich (112) zwischen dem Einlaufbereich (110) und dem Auslaufbereich (114) angeordnet oder ausgebildet ist, wobei die Zentrierausnehmung (108) längs des Messbereichs (112) einen konstanten Querschnitt aufweist, **dadurch gekennzeichnet, dass** das Zentrierelement (100) ein Einlaufende (124) und ein Auslaufende (126) aufweist und dass die Zentrierausnehmung (108) längs des Einlaufbereichs (110) einen sich ausgehend vom Einlaufende (124) zum Messbereich (112) hin verjüngenden Querschnitt aufweist, dass die Zentrierausnehmung (108) längs des Auslaufbereichs (114) einen sich ausgehend vom Auslaufende (126) zum Messbereich (112) hin verjüngenden Querschnitt aufweist, dass Messbereichnutseitenflächen (130) der Zentrierausnehmung (108) im Messbereich (112) Messbereichnutseitenflächenebenen (134) definieren, die sich längs einer Schnittgeraden (136) schneiden, welche parallel oder im Wesentlichen parallel zur Längsrichtung (104) verläuft, dass Einlaufbereichnutseitenflächen (128) der Zentrierausnehmung (108) im Einlaufbereich (110) Einlaufbereichnutseitenflächenebenen (138) definieren, die sich längs einer Einlaufschnittgeraden (140) schneiden, welche Einlaufschnittgerade (140) mit der Längsrichtung (104) einen Einlaufwinkel (142) einschließt, und dass Auslaufbereichnutseitenflächen (132) der Zentrierausnehmung (108) im Auslaufbereich (114) Auslaufbereichnutseitenflächenebenen (144) definieren, die sich längs einer Auslaufschnittgeraden (146) schneiden, welche Auslaufschnittgerade (146) mit der Längsrichtung (104) einen Auslaufwinkel (148) einschließt.

2. System nach Anspruch 1, **dadurch gekennzeichnet, dass** die Tastgliederlängsachse (224) quer, insbesondere senkrecht, zur Längsrichtung (104) verläuft.

3. System nach einem der voranstehenden Ansprüche, **dadurch gekennzeichnet, dass** die Zentrierausnehmung (108) in Form einer Nut (116) ausgebildet ist, welche nach unten weisend geöffnet ist,
wobei insbesondere die Nut (116) in Form einer Keilnut (118) ausgebildet ist und zwei relativ zueinander um einen Keilwinkel (120) geneigte Nutseitenflächen (122) aufweist,
wobei weiter insbesondere der Keilwinkel (120) einen Wert in einem Bereich von etwa 70° bis etwa 110° aufweist, insbesondere einen Wert von etwa 90°.

4. System nach einem der voranstehenden Ansprüche, **dadurch gekennzeichnet, dass**
a) der Einlaufwinkel (142) einen Wert in einem Bereich von etwa 1° bis etwa 5° aufweisen, weiter insbesondere einen Wert von etwa 3°
und/oder
b) der Auslaufwinkel (148) einen Wert in einem Bereich von etwa 1° bis etwa 5° aufweisen, weiter insbesondere einen Wert von etwa 3°,
und/oder
c) das Zentrierelement (100) quer oder im Wesentlichen quer zur Schwerkraftrichtung (74) und quer oder im Wesentlichen quer zur Längsrichtung (104) beweglich gelagert ist, insbesondere senkrecht zur Schwerkraftrichtung (74) und insbesondere senkrecht zur Längsrichtung (104).

5. System nach einem der voranstehenden Ansprüche, **dadurch gekennzeichnet, dass** den beiden Tastgliedern (210) mindestens ein Messkopf (206) zugeordnet ist zum Messen einer Bewegung und/oder Auslenkung der beiden Tastglieder (210) infolge eines Kontakts mit dem Werkstück (12).

6. System nach Anspruch 5, **dadurch gekennzeichnet, dass**
a) jedem der beiden Tastglieder (210) ein eigener Messkopf (206) zugeordnet ist
und/oder
b) der mindestens eine Messkopf (206) und das Zentrierelement (100) in einer Messstellung miteinander unbeweglich gekoppelt sind
und/oder
c) der mindestens eine Messkopf (206) und das Zentrierelement (100) relativ zueinander justierbar angeordnet sind.

7. System nach einem der voranstehenden Ansprüche, **dadurch gekennzeichnet, dass** freie, aufeinander zu weisende Enden der beiden Tastglieder (210) in einer Ebene (244) quer, insbesondere senkrecht, zur Längsrichtung (104) relativ zum Zentrierelement (100) und/oder zum mindestens einen Messkopf (206) justierbar sind.

8. System nach einem der voranstehenden Ansprüche, **dadurch gekennzeichnet, dass** die Vorrichtung (14) einen Rahmen (56) umfasst, dass am Rahmen (56) ein Horizontalschlitten (90) quer zur Schwerkraftrichtung (74) und quer zur Längsrichtung (104) beweglich gelagert ist und dass der Horizontalschlitten (90) das Zentrierelement (100) trägt wobei insbesondere
a) der Horizontalschlitten (90) den mindestens einen Messkopf (206) trägt
und/oder
b) am Rahmen (56) ein Vertikalschlitten (80) parallel zur Schwerkraftrichtung (74) beweglich gelagert ist und der Vertikalschlitten (80) das Zentrierelement (100) und/oder den mindestens einen Messkopf (206) und/oder den Horizontalschlitten (90) trägt,
wobei insbesondere der Vertikalschlitten (80) mit einem Ausgleichsgewicht (158) gekoppelt ist,
wobei weiter insbesondere eine Masse des Ausgleichsgewichts (158) kleiner ist als eine Masse des Vertikalschlittens (80) und der von diesem getragenen Teile und Elemente.

9. System nach einem der voranstehenden Ansprüche, **gekennzeichnet durch** eine Transportvorrichtung (16) zum Bewegen des Werkstücks (12) längs einer geradlinigen Bahn
wobei insbesondere
a) die Transportvorrichtung (16) einen geradlinigen Transportvorrichtungsabschnitt (32) umfasst und die Vorrichtung (14) zur Messung der Abmessung (54) des Werkstücks (12) im Bereich des geradlinigen Transportvorrichtungsabschnitts (32) angeordnet ist
und/oder
b) die Transportvorrichtung (16) mindestens ein Transportelement (18) umfasst, welches das Werkstück (12) trägt und in einer Transportrichtung (36) bewegt, insbesondere kontinuierlich bewegt, wobei weiter insbesondere
das mindestens eine Transportelement (18) in Form eines Transportbandes (20) oder einer Transportkette oder eines oben offenen Transportbehälters ausgebildet ist
und/oder
das mindestens eine Transportelement (18) in Form eines umlaufenden Transportelements (18) ausgebildet ist und/oder
die Vorrichtung (14) zur Messung der Abmessung (54) des Werkstücks (12) im Bereich des geradlinigen Transporteinrichtungsabschnitts (32) oberhalb des mindestens einen Transportelements (18) angeordnet ist.

10. Verfahren zur Messung einer Abmessung (54) eines längs einer geradlinigen Bewegungsbahn bewegten Werkstücks (12), wobei das Verfahren umfasst:
• Bereitstellen einer Messeinrichtung (246), welche zwei Tastglieder (210) umfasst, die relativ zueinander beweglich gelagert sind,
• Bereitstellen eines Zentrierelements (100), welches eine Längsrichtung (104) definiert, der Messeinrichtung (246) zugeordnet und in einer Richtung parallel oder im Wesentlichen parallel zur Schwerkraftrichtung (74) zusammen mit der Messeinrichtung (246) beweglich gelagert ist,
• Bewegen des Zentrierelements (100) infolge eines Kontakts mit dem zu vermessenden Werkstück (12) entgegen der Schwerkraftrichtung (74) aus einer Grundstellung in eine Messstellung,
• Messen des Abstands zwischen den zwei Tastgliedern, die insbesondere infolge eines Kontakts mit dem Werkstück (12) voneinander weg bewegbar sind, und
• Berechnen der zu messenden Abmessung (54) des Werkstücks (12) aus einem Abstandsverlauf des gemessenen Abstands zwischen den zwei Tastgliedern (210) in der Messstellung,
wobei das Zentrierelement (100) infolge eines Kontakts mit dem zu vermessenden Werkstück (12) entgegen der Schwerkraftrichtung (74) aus einer Grundstellung in eine Messstellung bewegt wird, wobei ein Zentrierelement (100) bereitgestellt wird, welches eine Zentrierausnehmung (108) aufweist, welche einen Einlaufbereich (110) und einen Messbereich (112) definiert und einen Auslaufbereich (114) aufweist, wobei das Werkstück (12) während seiner Bewegung die Zentrierausnehmung (108) zuerst im Einlaufbereich (110) kontaktiert und das Zentrierelement (100) dabei von der Grundstellung in die Messstellung überführt und dann im Messbereich (112) in der Messstellung kontaktiert und wobei durch Messen des Abstands zwischen den Tastgliedern (210) beim Durchlaufen des Messbereichs (112) in der Messstellung die zu messende Abmessung (54) des Werkstücks (12) bestimmt wird, wobei der Messbereich (112) zwischen dem Einlaufbereich (110) und dem Auslaufbereich (114) angeordnet oder ausgebildet ist und wobei das Werkstück (12) während seiner Bewegung die Zentrierausnehmung (108) nach dem Messbereich (112) im Auslaufbereich (114) kontaktiert und dabei das Zentrierelement (100) wieder aus der Messstellung in die Grundstellung zurückführt, wobei ein Zentrierelement (100) bereitgestellt wird, dessen Zentrierausnehmung (108) längs des Messbereichs (112) einen konstanten Querschnitt aufweist, **dadurch gekennzeichnet, dass** ein Zentrierelement (100) mit einem Einlaufende (124) und einem Auslaufende (126) bereitgestellt wird und die Zentrierausnehmung (108) längs des Einlaufbereichs (110) einen sich ausgehend vom Einlaufende (124) zum Messbereich (112) hin verjüngenden Querschnitt aufweist, so dass das Zentrierelement (100) ausgehend vom Einlaufende (124) auf dem Werkstück (12) aufgleitet und von der Grundstellung in die Messstellung überführt wird, dass ein Zentrierelement (100) bereitgestellt wird, dessen Zentrierausnehmung (108) längs des Auslaufbereichs (114) einen sich ausgehend vom Auslaufende (126) zum Messbereich (112) hin verjüngenden Querschnitt aufweist, und das Zentrierelement (100) ausgehend vom Messbereich (112) bis zum Auslaufende (126) auf dem Werkstück (12) aufliegt und auf diesem gleitet und dabei von der Messstellung in die Grundstellung zurückgeführt wird, dass ein Zentrierelement (100) bereitgestellt wird, bei welchem Messbereichnutseitenflächen (130) der Zentrierausnehmung (108) im Messbereich (112) Messbereichnutseitenflächenebenen (134) definieren, die sich längs einer Schnittgeraden (136) schneiden, welche parallel oder im Wesentlichen parallel zur Längsrichtung (104) verläuft, dass ein Zentrierelement (100) bereitgestellt wird, bei welchem Einlaufbereichnutseitenflächen (128) der Zentrierausnehmung (108) im Einlaufbereich (110) Einlaufbereichnutseitenflächenebenen (138) definieren, die sich längs einer Einlaufschnittgeraden (140) schneiden, welche Einlaufschnittgerade (140) mit der Längsrichtung (104) einen Einlaufwinkel (142) einschließt und ein Zentrierelement (100) bereitgestellt wird, bei welchem Auslaufbereichnutseitenflächen (132) der Zentrierausnehmung (108) im Auslaufbereich (114) Auslaufbereichnutseitenflächenebenen (144) definieren, die sich längs einer Auslaufschnittgeraden (146) schneiden, welche Auslaufschnittgerade (146) mit der Längsrichtung (104) einen Auslaufwinkel (148) einschließt.

11. Verfahren nach Anspruch 10, **dadurch gekennzeichnet, dass**
a) die zwei Tastglieder (210) infolge des Kontakts mit dem Werkstück (12) in Richtung einer Tastgliederlängsachse (224) bewegt werden, die quer, insbesondere senkrecht, zur Längsrichtung (104) verläuft,
und/oder
b) ein Zentrierelement (100) mit einer Zentrierausnehmung (108) bereitgestellt wird, welche Zentrierausnehmung (108) in Form einer Nut (116) ausgebildet ist, welche nach unten weisend geöffnet ist, und dass das Werkstück (12) während seiner Bewegung die Nut (116) kontaktiert und dabei das Zentrierelement (100) relativ zu sich zentriert,
wobei insbesondere ein Zentrierelement (100) mit einer Nut (116) bereitgestellt wird, die in Form einer Keilnut (118) ausgebildet ist und zwei relativ zueinander um einen Keilwinkel (120) geneigte Nutseitenflächen (122) aufweist, und dass das Werkstück (12) während seiner Bewegung die Nutseitenflächen (122) kontaktiert und dabei das Zentrierelement (100) relativ zu sich zentriert.

12. Verfahren nach Anspruch 10 oder 11, **dadurch gekennzeichnet, dass** das Zentrierelement (100) quer oder im Wesentlichen quer zur Schwerkraftrichtung (74) und quer oder im Wesentlichen quer zur Längsrichtung (104) beweglich gelagert wird, insbesondere senkrecht zur Schwerkraftrichtung (74) und insbesondere senkrecht zur Längsrichtung (104), so dass das Zentrierelement (100) infolge eines Kontakts mit dem zu vermessenden Werkstück (12) quer oder im Wesentlichen quer zur Schwerkraftrichtung (74) und quer oder im Wesentlichen quer zur Längsrichtung (104) bewegt wird.

13. Verfahren nach einem der Ansprüche 10 bis 12, **dadurch gekennzeichnet, dass** den beiden Tastgliedern (210) mindestens ein Messkopf (206) zugeordnet wird zum Messen einer Bewegung und/oder Auslenkung der beiden Tastglieder (210) infolge eines Kontakts mit dem Werkstück (12).

14. Verfahren nach Anspruch 13, **dadurch gekennzeichnet, dass**
a) jedem der beiden Tastglieder (210) ein eigener Messkopf (206) zugeordnet wird
und/oder
b) der mindestens eine Messkopf (206) und das Zentrierelement (100) in einer Messstellung miteinander unbeweglich gekoppelt werden
und/oder
c) der mindestens eine Messkopf (206) und das Zentrierelement (100) relativ zueinander justierbar angeordnet werden zum Positionieren des mindestens einen Messkopfs (206) und des Zentrierelements (100) relativ zueinander in Abhängigkeit von Größe und Form des zu vermessenden Werkstücks (12).

15. Verfahren nach einem der Ansprüche 10 bis 14, **dadurch gekennzeichnet, dass**
a) freie, aufeinander zu weisende Enden der beiden Tastglieder (210) in einer Ebene quer, insbesondere senkrecht, zur Längsrichtung (104) relativ zum Zentrierelement (100) und/oder zum mindestens einen Messkopf (206) in Abhängigkeit von Größe und Form des zu vermessenden Werkstücks (12) justiert werden
und/oder
b) das Zentrierelement (100) mit einem Ausgleichsgewicht (158) gekoppelt wird,
wobei insbesondere eine Masse des Ausgleichsgewichts (158) kleiner gewählt wird als eine Masse des Zentrierelements (100) und aller mit diesem gekoppelten Teile und Elemente,
und/oder
c) das Zentrierelement (100) oberhalb des bewegten Werkstücks (12) angeordnet wird.

## Claims

1. System (10) for the measurement of a dimension (54) of a workpiece (12) moved along a straight movement path, comprising a device (14) for measuring the dimension (54) of the workpiece (12), wherein the device (14) comprises a centring element (100) and two sensing members (210) associated therewith, wherein the centring element (100) is arranged and configured such that it defines a longitudinal direction (104) running parallel or substantially parallel to the movement path, wherein the longitudinal direction runs transversely, in particular perpendicularly, to the direction of gravity (74), wherein the two sensing members (210) are movably mounted and, as a result of a contact with the workpiece (12), are movable apart from each other, wherein the centring element (100) is mounted movably in a direction parallel to or substantially parallel to the direction of gravity (74) and as a result of a contact with the workpiece (12) is movable contrary to the direction of gravity (74), wherein the centring element (100) has a centring recess (108), which defines a run-in region (110) and a measurement region (112), wherein the centring element (100) has a run-out region (114) and wherein the measurement region (112) is arranged or configured between the run-in region (110) and the run-out region (114), wherein the centring recess (108) has a constant cross-section along the measurement region (112), **characterised in that** the centring element (100) has a run-in end (124) and a run-out end (126) and **in that** the centring recess (108) has, along the run-in region (110), a cross-section tapering starting from the run-in end (124) towards the measurement region (112), **in that** the centring recess (108) has, along the run-out region (114), a cross-section tapering starting from the run-out end (126) towards the measurement region (112), **in that** measurement region groove side faces (130) of the centring recess (108) in the measurement region (112) define measurement region groove side face planes (134), which intersect along a line of intersection (136), which runs parallel or substantially parallel to the longitudinal direction (104), **in that** run-in region groove side faces (128) of the centring recess (108) in the run-in region (110) define run-in region groove side face planes (138), which intersect along a run-in line of intersection (140), which run-in line of intersection (140) defines a run-in angle (142) with the longitudinal direction (104), and **in that** run-out region groove side faces (132) of the centring recess (108) in the run-out region (114) define run-out region groove side face planes (144), which intersect along a run-out line of intersection (146), which run-out line of intersection (146) defines a run-out angle (148) with the longitudinal direction (104).

2. System according to claim 1, **characterised in that** the sensing member longitudinal axis (224) runs transversely, preferably perpendicularly, to the longitudinal direction (104).

3. System according to one of the preceding claims, **characterised in that** the centring recess (108) is configured in the shape of a groove (116), which is open facing downwardly,
wherein in particular the groove (116) is configured in the form of a wedge groove (118) and comprises two groove side faces (122) inclined relative to each other at a wedge angle (120),
wherein further in particular the wedge angle (120) has a value in a range from approximately 70° to approximately 110°, in particular a value of approximately 90°.

4. System according to one of the preceding claims, **characterised in that**
a) the run-in angle (142) has a value in a range from approximately 1° to approximately 5°, further in particular a value of approximately 3°
and/or
b) the run-out angle (148) has a value in a range from approximately 1° to approximately 5°, further in particular a value of approximately 3°,
and/or
c) the centring element (100) is movably mounted transversely or substantially transversely to the direction of gravity (74) and transversely or substantially transversely to the longitudinal direction (104), in particular perpendicularly to the direction of gravity (74) and in particular perpendicularly to the longitudinal direction (104).

5. System according to one of the preceding claims, **characterised in that** at least one measuring head (206) is associated with the two sensing members (210) for the measurement of a movement and/or a deflection of the two sensing members (210) as a result of a contact with the workpiece (12).

6. System according to claim 5, **characterised in that**
a) each of the two sensing members (210) has its own measuring head (206)
and/or
b) at least one measuring head (206) and the centring element (100) are immovably coupled to each other in a measurement position
and/or
c) the at least one measuring head (206) and the centring element (100) are arranged to be relatively adjustable to each other.

7. System according to one of the preceding claims, **characterised in that** free ends of the two sensing members (210) which are to face each other are adjustable in a plane (244) transverse, in particular perpendicular, to the longitudinal direction (104) relative to the centring element (100) and/or to the at least one measuring head (206).

8. System according to one of the preceding claims, **characterised in that** the device (14) comprises a frame (56), **in that** a horizontal carriage (90) is movably mounted on the frame (56) transversely to the direction of gravity (74) and transversely to the longitudinal direction (104) and **in that** the horizontal carriage (90) carries the centring element (100)
wherein in particular
a) the horizontal carriage (90) carries the at least one measuring head (206)
and/or
b) a vertical carriage (80) is movably mounted on the frame (56) parallel to the direction of gravity (74) and the vertical carriage (80) carries the centring element (100) and/or the at least one measuring head (206) and/or the horizontal carriage (90),
wherein in particular the vertical carriage (80) is coupled with a balancing weight (158),
wherein further in particular a mass of the balancing weight (158) is smaller than a mass of the vertical carriage (80) and the parts and elements carried thereby.

9. System according to one of the preceding claims, **characterised by** a transport device (16) for moving the workpiece (12) along a linear path
wherein in particular
a) the transport device (16) comprises a linear transport device section (32) and the device (14) for measuring the dimension (54) of the workpiece (12) is arranged in the region of the linear transport device section (32)
and/or
b) the transport device (16) comprises at least one transport element (18) which carries the workpiece (12) and moves it, in particular continually moves, in a transport direction (36) wherein further in particular
the at least one transport element (18) is configured in the form of a transport belt (20) or a transport chain or an upwardly-open transport container
and/or
the at least one transport element (18) is configured in the form of a circulating transport element (18)
and/or
the device (14) for the measurement of the dimension (54) of the workpiece (12) is arranged in the region of the linear transport device section (32) above the at least one transport element (18).

10. Method for the measurement of a dimension (54) of a workpiece (12) moved along a linear path of movement, wherein the method comprises:
• providing a measurement device (246), which comprises two sensing members (210), which are mounted movably relative to each other,
• providing a centring element (100), which defines a longitudinal direction (104), is associated with the measurement device (246) and is movably mounted in a direction parallel, or substantially parallel, to the direction of gravity (74) together with the measurement device (246),
• moving the centring element (100) as a result of a contact with the workpiece (12) to be measured against the direction of gravity (74) from a basic position into a measurement position,
• measuring the spacing between the two sensing members, which are movable away from each other in particular as a result of a contact with the workpiece (12), and
• calculating the dimension (54) of the workpiece (12) to be measured from a course of the measured spacing between the two sensing members (210) in the measurement position,
wherein the centring element (100) as a result of a contact with the workpiece (12) to be measured is moved against the direction of gravity (74) from a basic position into a measurement position, wherein a centring element (100) is provided, which comprises a centring recess (108), which defines a run-in region (110) and a measurement region (112) and has a run-out region (114), wherein the workpiece (12) during its movement first contacts the centring recess (108) in the run-in region (110) and thereby moves the centring element (100) from the basic position into the measurement position and then contacts it in the measurement region (112) in the measurement position and wherein by measurement of the spacing between the sensing members (210) during passage through the measurement region (112) in the measurement position determines the dimension (54) of the workpiece (12) to be measured, wherein the measurement region (112) is arranged or formed between the run-in region (110) and the run-out region (114) and wherein the workpiece (12) during its movement contacts the centring recess (108) after the measurement region (112) in the run-out region (114) and thereby returns the centring element (100) from the measurement position back into the basic position, wherein a centring element (100) is provided, the centring recess (108) of which has a constant cross-section along the measurement region (112), **characterised in that** a centring element (100) is provided with a run-in end (124) and a run-out end (126) and the centring recess (108) along the run-in region (110) has a tapering cross-section starting from the run-in end (124) to the measurement region (112), so that the centring element (100) starting from the run-in end (124) slides on the workpiece (12) and is guided from the basic position into the measurement position, **in that** a centring element (100) is provided, the centring recess (108) of which along the run-out region (114) has a tapering cross section starting from the run-out end (126) to the measurement region (112), and the centring element (100) starting from the measuring region (112) up to the run-out end (126) abuts the workpiece (12) and slides thereon and thereby is guided back from the measurement position into the basic position, **in that** a centring element (100) is provided in which measurement region groove side faces (130) of the centring recess (108) in the measurement region (112) define measurement region groove side face planes (134) which intersect along a line of intersection (136), which runs parallel or substantially parallel to the longitudinal direction (104), **in that** a centring element (100) is provided in which run-in region groove side faces (128) of the centring recess (108) in the run-in region (110) define run-in region groove side face planes (138), which intersect along a run-in line of intersection (140), which run-in line of intersection (140) defines a run-in angle (142) with the longitudinal direction (104) and a centring element (100) is provided, for which run-out region groove side faces (132) of the centring recess (108) in the run-out region (114) define run-out region groove side face planes (144), which intersect along a run-out line of intersection (146), which run-in line of intersection (146) defines a run-out angle (148) with the longitudinal direction (104).

11. Method according to claim 10, **characterised in that**
a) the two sensing members (210) as a result of the contact with the workpiece (12) are moved in the direction of a sensor member longitudinal axis (224) which runs transversely, in particular perpendicularly to the longitudinal direction (104)
and/or
b) a centring element (100) is provided with a centring recess (108), which centring recess (108) is configured in the form of a groove (116), which is open facing downwardly, and **in that** the workpiece (12) during its movement contacts the groove (116) and thereby centres the centring element (100) relative to itself, wherein in particular a centring element (100) is provided with a groove (116), which is configured in the form of a wedge groove (118) and has two groove side faces (122) inclined relative to each other at a wedge angle (120), and **in that** the workpiece (12) during its movement contacts the groove side faces (122) and thereby centres the centring element (100) relative to itself.

12. Method according to claim 10 or 11, **characterised in that** the centring element (100) is mounted movably transversely or substantially transversely to the direction of gravity (74) and transversely or substantially transversely to the longitudinal direction (104), in particular perpendicularly to the direction of gravity (74) and in particular perpendicularly to the longitudinal direction (104), so that the centring element (100) as the result of a contact with the workpiece (12) to be measured is moved transversely or substantially transversely to the direction of gravity (74) and transversely or substantially transversely to the longitudinal direction (104).

13. Method according to one of claims 10 to 12, **characterised in that** at least one measurement head (206) is associated with the two sensing members (210) for the measurement of a movement and/or a deflection of the two sensing members (210) as a result of a contact with the workpiece (12).

14. Method according to claim 13, **characterised in that**
a) each of the two sensing members (210) has its own measurement head (206) associated therewith
and/or
b) the at least one measurement head (206) and the centring element (100) are immovably coupled to each other in a measurement position
and/or
c) the at least one measurement head (206) and the centring element (100) are arranged adjustable relative to each other for the positioning of the at least one measurement head (206) and the centring element (100) relative to each other in dependence on the size and shape of the workpiece (12) to be measured.

15. Method according to one of claims 10 to 14, **characterised in that**
a) free ends of the two sensing members (210) which are to face each other are adjusted in a plane transverse, in particular perpendicular, to the longitudinal direction (104) relative to the centring element (100) and/or to the at least one measurement head (206) in dependence on the size and shape of the workpiece (12) to be measured
and/or
b) the centring element (100) is coupled with a balancing weight (158),
wherein in particular a mass of the balancing weight (158) is selected to be smaller than a mass of the centring element (100) and all the parts and elements coupled therewith,
and/or
c) the centring element (100) is arranged over the moved workpiece (12).

## Revendications

1. Système (10) destiné à mesurer une dimension (54) d'une pièce (12) déplacée le long d'une voie de déplacement rectiligne, comprenant un dispositif (14) destiné à mesurer la dimension (54) de la pièce (12), système
dans lequel le dispositif (14) comprend un élément de centrage (100) et deux organes de palpeur (210), qui lui sont associés,
dans lequel l'élément de centrage (100) est agencé et réalisé de manière à définir une direction longitudinale (104) s'étendant de manière parallèle ou sensiblement parallèle à la voie de déplacement,
dans lequel ladite direction longitudinale s'étend transversalement, notamment perpendiculairement, à la direction de la gravité (74),
dans lequel les deux organes de palpeur (210) sont montés mobiles et peuvent, à la suite d'un contact avec la pièce (12), être déplacés de manière à s'écarter l'un de l'autre,
dans lequel l'élément de centrage (100) est monté mobile dans une direction parallèle ou sensiblement parallèle à la direction de la gravité (74), et peut, à la suite d'un contact avec la pièce (12), être déplacé à l'encontre de la direction de la gravité (74),
dans lequel l'élément de centrage (100) présente un évidement de centrage (108), qui définit une zone d'entrée (110) et une zone de mesure (112),
dans lequel l'élément de centrage (100) présente une zone de sortie (114), et
dans lequel la zone de mesure (112) est agencée ou formée entre la zone d'entrée (110) et la zone de sortie (114),
et dans lequel l'évidement de centrage (108) présente une section transversale constante le long de la zone de mesure (112),
**caractérisé**
**en ce que** l'élément de centrage (100) présente une extrémité d'entrée (124) et une extrémité de sortie (126), et
**en ce que** l'évidement de centrage (108) présente, le long de la zone d'entrée (110), une section transversale se rétrécissant à partir de l'extrémité d'entrée (124) vers la zone de mesure (112),
**en ce que** l'évidement de centrage (108) présente, le long de la zone de sortie (114), une section transversale se rétrécissant à partir de l'extrémité de sortie (126) vers la zone de mesure (112),
**en ce que** des surfaces latérales de rainure de zone de mesure (130) de l'évidement de centrage (108) définissent dans la zone de mesure (112), des plans de surface latérale de rainure de zone de mesure (134), qui se coupent le long d'une droite d'intersection (136) s'étendant de manière parallèle ou sensiblement parallèle à ladite direction longitudinale (104),
**en ce que** des surfaces latérales de rainure de zone d'entrée (128) de l'évidement de centrage (108) définissent dans la zone d'entrée (110), des plans de surface latérale de rainure de zone d'entrée (138), qui se coupent le long d'une droite d'intersection d'entrée (140), cette droite d'intersection d'entrée (140) formant un angle d'entrée (142) avec ladite direction longitudinale (104),
et **en ce que** des surfaces latérales de rainure de zone de sortie (132) de l'évidement de centrage (108) définissent dans la zone de sortie (114), des plans de surface latérale de rainure de zone de sortie (144), qui se coupent le long d'une droite d'intersection de sortie (146), cette droite d'intersection de sortie (146) formant un angle de sortie (148) avec ladite direction longitudinale (104).

2. Système selon la revendication 1, **caractérisé en ce que** l'axe longitudinal d'organe de palpeur (224) s'étend transversalement, notamment perpendiculairement, à ladite direction longitudinale (104).

3. Système selon l'une des revendications précédentes, **caractérisé en ce que** l'évidement de centrage (108) est réalisé sous la forme d'une rainure (116), qui est ouverte en direction du bas,
la rainure (116) étant notamment réalisée sous la forme d'une rainure en coin (118), et présentant deux surfaces latérales de rainure (122) inclinées d'un angle de coin (120) l'une par rapport à l'autre, et
l'angle de coin (120) présentant par ailleurs notamment une valeur se situant dans une plage d'environ 70° à environ 110°, et ayant notamment une valeur d'environ 90°.

4. Système selon l'une des revendications précédentes, **caractérisé en ce que**
a) l'angle d'entrée (142) présente une valeur se situant dans une plage d'environ 1° à environ 5°, et a notamment une valeur d'environ 3°,
et/ou
b) l'angle de sortie (148) présente une valeur se situant dans une plage d'environ 1° à environ 5°, et a notamment une valeur d'environ 3°,
et/ou
c) l'élément de centrage (100) est monté mobile transversalement ou sensiblement transversalement à la direction de la gravité (74) et transversalement ou sensiblement transversalement à ladite direction longitudinale (104), notamment perpendiculairement à la direction de la gravité (74) et notamment perpendiculairement à ladite direction longitudinale (104).

5. Système selon l'une des revendications précédentes, **caractérisé en ce qu'**aux deux organes de palpeur (210) est associée au moins une tête de mesure (206) pour mesurer un déplacement et/ou une déviation des deux organes de palpeur (210) à la suite d'un contact avec la pièce (12).

6. Système selon la revendication 5, **caractérisé en ce que**
a) à chacun des deux organes de palpeur (210) est associée sa propre tête de mesure (206),
et/ou
b) ladite au moins une tête de mesure (206) et l'élément de centrage (100) sont, dans une position de mesure, couplés mutuellement de manière non mobile,
et/ou
c) ladite au moins une tête de mesure (206) et l'élément de centrage (100) sont agencés de manière ajustable l'un par rapport à l'autre.

7. Système selon l'une des revendications précédentes, **caractérisé en ce que** des extrémités libres dirigées l'une vers l'autre, des deux organes de palpeur (210), peuvent être ajustées, dans un plan (244) transversalement, notamment perpendiculairement, à ladite direction longitudinale (104), par rapport à l'élément de centrage (100) et/ou à ladite au moins une tête de mesure (206).

8. Système selon l'une des revendications précédentes, **caractérisé en ce que** le dispositif (14) comprend un bâti (56), **en ce que** sur le bâti (56) est monté un chariot horizontal (90) mobile transversalement à la direction de la gravité (74) et transversalement à ladite direction longitudinale (104), et **en ce que** le chariot horizontal (90) porte l'élément de centrage (100),
système dans lequel notamment
a) le chariot horizontal (90) porte ladite au moins une tête de mesure (206),
et/ou
b) sur le bâti (56) est monté un chariot vertical (80) mobile parallèlement à la direction de la gravité (74), et le chariot vertical (80) porte l'élément de centrage (100) et/ou ladite au moins une tête de mesure (206) et/ou le chariot horizontal (90),
le chariot vertical (80) étant notamment couplé à un contrepoids d'équilibrage (158),
une masse du contrepoids d'équilibrage (158) étant par ailleurs notamment inférieure à une masse du chariot vertical (80) et des pièces et éléments portés par celui-ci.

9. Système selon l'une des revendications précédentes, **caractérisé par** un dispositif de transport (16) pour déplacer la pièce (12) le long d'une voie rectiligne, système dans lequel notamment
a) le dispositif de transport (16) comporte un tronçon de dispositif de transport rectiligne (32), et le dispositif (14) pour mesurer ladite dimension (54) de la pièce (12) est agencé dans la zone du tronçon de dispositif de transport rectiligne (32),
et/ou
b) le dispositif de transport (16) comprend au moins un élément de transport (18), qui porte la pièce (12) et la déplace, notamment la déplace de manière continue, dans une direction de transport (36), système dans lequel par ailleurs notamment
ledit au moins un élément de transport (18) est réalisé sous la forme d'une bande de transport (20) ou d'une chaîne de transport ou d'un contenant de transport ouvert sur le haut,
et/ou
ledit au moins un élément de transport (18) est réalisé sous la forme d'un élément de transport (18) en révolution,
et/ou
le dispositif (14) pour mesurer la dimension (54) de la pièce (12) est agencé dans la zone du tronçon de dispositif de transport rectiligne (32), au-dessus dudit au moins un élément de transport (18).

10. Procédé destiné à mesurer une dimension (54) d'une pièce (12) déplacée le long d'une voie de déplacement rectiligne, le procédé comprenant :
• l'utilisation d'un agencement de mesure (246), qui comprend deux organes de palpeur (210), qui sont montés mobiles l'une par rapport à l'autre,
• l'utilisation d'un élément de centrage (100), qui définit une direction longitudinale (104), est associé à l'agencement de mesure (246), et est monté mobile, en commun avec l'agencement de mesure (246), dans une direction parallèle ou sensiblement parallèle à la direction de la gravité (74),
• le déplacement de l'élément de centrage (100) à la suite d'un contact avec la pièce (12) à mesurer, à l'encontre de la direction de la gravité (74), d'une position initiale à une position de mesure,
• la mesure de la distance entre les deux organes de palpeur, qui notamment, à la suite d'un contact avec la pièce (12), peuvent être déplacés de manière à s'écarter l'un de l'autre, et
• le calcul de la dimension (54) de la pièce (12), qui doit être mesurée, à partir d'un relevé de distance de la distance mesurée entre les deux organes de palpeur (210) dans la position de mesure,
procédé
d'après lequel l'élément de centrage (100), à la suite d'un contact avec la pièce (12) à mesurer, est déplacé à l'encontre de la direction de la gravité (74), d'une position initiale à une position de mesure,
d'après lequel on utilise un élément de centrage (100), qui présente un évidement de mesure (108) définissant une zone d'entrée (110) et une zone de mesure (112) et présentant une zone de sortie (114),
d'après lequel la pièce (12), pendant son déplacement, entre en contact avec l'évidement de centrage (108), tout d'abord dans la zone d'entrée (110), et transfère à cette occasion l'élément de centrage (100) de la position initiale à la position de mesure, et vient contacter ensuite la zone de mesure (112) dans la position de mesure, et
d'après lequel, par la mesure de la distance entre les organes de palpeur (210) lors du passage de la zone de mesure (112), dans la position de mesure, on détermine la dimension (54) à mesurer de la pièce (12),
d'après lequel la zone de mesure (112) est agencée ou formée entre la zone d'entrée (110) et la zone de sortie (114), et
d'après lequel la pièce (12), pendant son déplacement, après la zone de mesure (112), vient contacter l'évidement de centrage (108) dans la zone de sortie (114) en ramenant à cette occasion l'élément de centrage (100) à nouveau de sa position de mesure à la position initiale,
d'après lequel on utilise un élément de centrage (100) dont l'évidement de centrage (108) présente une section transversale constante le long de la zone de mesure (112),
**caractétisé**
en ce que l'on utilise un élément de centrage (100) avec une extrémité d'entrée (124) et une extrémité de sortie (126), et l'évidement de centrage (108) présente le long de la zone d'entrée (110), une section transversale se rétrécissant à partir de l'extrémité d'entrée (124) vers la zone de mesure (112), de sorte que l'élément de centrage (100) vient glisser, à partir de l'extrémité d'entrée (124), sur la pièce (12) et est transférée de la position initiale à la position de mesure,
en ce que l'on utilise un élément de centrage (100) dont l'évidement de centrage (108) présente, le long de la zone de sortie (114), une section transversale se rétrécissant à partir de l'extrémité de sortie (126) vers la zone de mesure (112), et l'élément de centrage (100) repose, de la zone de mesure (112) jusqu'à l'extrémité de sortie (126), sur la pièce (12) et glisse sur celle-ci, et est, à cette occasion, ramené de la position de mesure à la position initiale,
en ce que l'on utilise un élément de centrage (100) dans lequel des surfaces latérales de rainure de zone de mesure (130) de l'évidement de centrage (108) définissent dans la zone de mesure (112), des plans de surface latérale de rainure de zone de mesure (134), qui se coupent le long d'une droite d'intersection (136) s'étendant de manière parallèle ou sensiblement parallèle à ladite direction longitudinale (104),
en ce que l'on utilise un élément de centrage (100) dans lequel des surfaces latérales de rainure de zone d'entrée (128) de l'évidement de centrage (108) définissent dans la zone d'entrée (110), des plans de surface latérale de rainure de zone d'entrée (138), qui se coupent le long d'une droite d'intersection d'entrée (140), cette droite d'intersection d'entrée (140) formant un angle d'entrée (142) avec ladite direction longitudinale (104), et l'on utilise un élément de centrage (100) dans lequel des surfaces latérales de rainure de zone de sortie (132) de l'évidement de centrage (108) définissent dans la zone de sortie (114), des plans de surface latérale de rainure de zone de sortie (144), qui se coupent le long d'une droite d'intersection de sortie (146), cette droite d'intersection de sortie (146) formant un angle de sortie (148) avec ladite direction longitudinale (104).

11. Procédé selon la revendication 10, **caractérisé en ce que**
a) les deux organes de palpeur (210), suite à un contact avec la pièce (12), sont déplacés dans la direction d'un axe longitudinal d'organe de palpeur (224), qui s'étend transversalement, notamment perpendiculairement, à ladite direction longitudinale (104),
et/ou
b) l'on utilise un élément de centrage (100) avec un évidement de centrage (108), cet évidement de centrage (108) étant réalisé sous la forme d'une rainure (116), qui est ouverte en direction du bas, et **en ce que** la pièce (12), pendant son déplacement, entre en contact avec la rainure (116) et centre à cette occasion, l'élément de centrage (100) par rapport à elle,
et l'on utilise notamment un élément de centrage (100) avec une rainure (116), qui est réalisée sous la forme d'une rainure en coin (118) et présente des surfaces latérales de rainure (122) inclinées d'un angle de coin (120) l'une par rapport à l'autre, et **en ce que** la pièce (12), pendant son déplacement, entre en contact avec les surfaces latérales de rainure (122) et centre à cette occasion, l'élément de centrage (100) par rapport à elle.

12. Procédé selon la revendication 10 ou la revendication 11, **caractérisé en ce que** l'élément de centrage (100) est monté de manière à être mobile transversalement ou sensiblement transversalement à la direction de la gravité (74) et transversalement ou sensiblement transversalement à ladite direction longitudinale (104), notamment perpendiculairement à la direction de la gravité (74) et notamment perpendiculairement à ladite direction longitudinale (104), de sorte que l'élément de centrage (100), à la suite d'un contact avec la pièce (12) à mesurer, est déplacé transversalement ou sensiblement transversalement à la direction de la gravité (74), et transversalement ou sensiblement transversalement à ladite direction longitudinale (104).

13. Procédé selon l'une des revendications 10 à 12, **caractérisé en ce que** l'on associe aux deux organes de palpeur (210), au moins une tête de mesure (206) pour mesurer un déplacement et/ou une déviation des deux organes de palpeur (210) à la suite d'un contact avec la pièce (12).

14. Procédé selon la revendication 13, **caractérisé en ce que**
a) l'on associe à chacun des deux organes de palpeur (210) sa propre tête de mesure (206),
et/ou
b) ladite au moins une tête de mesure (206) et l'élément de centrage (100) sont, dans une position de mesure, couplés mutuellement de manière non mobile,
et/ou
c) ladite au moins une tête de mesure (206) et l'élément de centrage (100) sont agencés de manière ajustable l'un par rapport à l'autre, pour positionner réciproquement de manière relative ladite au moins une tête de mesure (206) et l'élément de centrage (100), en fonction de la grandeur et de la forme de la pièce (12) à mesurer.

15. Procédé selon l'une des revendications 10 à 14, **caractérisé en ce que**
a) des extrémités libres dirigées l'une vers l'autre, des deux organes de palpeur (210), sont ajustées, dans un plan transversalement, notamment perpendiculairement, à ladite direction longitudinale (104), par rapport à l'élément de centrage (100) et/ou à ladite au moins une tête de mesure (206), en fonction de la grandeur et de la forme de la pièce (12) à mesurer,
et/ou
b) l'élément de centrage (100) est couplé à un contrepoids d'équilibrage (158), une masse du contrepoids d'équilibrage (158) étant notamment choisie inférieure à une masse de l'élément de centrage (100) et de toutes les pièces et tous les éléments couplés à celui-ci,
et/ou
c) l'élément de centrage (100) est agencé au-dessus de la pièce (12) qui se déplace.
